# EUROPÄISCHE PATENTSCHRIFT

(11) **EP 3 326 863 B1**
(45) Veröffentlichungstag und Bekanntmachung des Hinweises auf die Patenterteilung: **30.06.2021**
(21) Anmeldenummer: 16200199.4
(22) Anmeldetag: 23.11.2016
(51) Int. Cl.: B60Q 3/14, B60Q 3/217, B60Q 3/64, B60Q 3/78

(54) **BAUTEIL**
COMPONENT
COMPOSANT

(43) Veröffentlichungstag der Anmeldung: 30.05.2018
(73) Patentinhaber: WEIDPLAS GmbH, 8630 Rüti (CH)
(72) Erfinder: HARKE, Stefan, 74889 Sinsheim (DE)
(74) Vertreter: Rutz, Andrea

(56) Entgegenhaltungen:
- WO-A2-2014/165597
- DE-A1-102012 101 315
- FR-A1- 2 937 603
- FR-A1- 3 008 774
- GB-A- 2 475 940
- JP-A- 2006 160 136

## Beschreibung

### TECHNISCHES GEBIET

Die vorliegende Erfindung betrifft ein beleuchtbares Bauteil, insbesondere für ein Fahrzeug. Derartige beleuchtete Bauteile werden beispielsweise als Fuss- oder Einstiegsleiste, Zierleiste oder Dekorelement eingesetzt.

### STAND DER TECHNIK

In Fahrzeugen und insbesondere Kraftfahrzeugen, wie zum Beispiel Autos, sind üblicherweise Bauteile vorgesehen, welche zu sehr unterschiedlichen Zwecken dienen können. Um die optische Wahrnehmung der Bauteile insbesondere in der Nacht zu verbessern, sind diese meist beleuchtbar ausgebildet. Beleuchtbare Bauteile sind beispielsweise im Bereich der Türen und des Kofferraumdeckels vorgesehen, um beispielsweise die Höhe einer Fussleiste zu kennzeichnen und/oder eine Markenbezeichnung darzustellen. Beleuchtbare Bauteile kommen in Fahrzeugen aber auch in Form von Bedienelementen, wie beispielsweise Tasten, vor.

Ein beleuchtbares Bauteil, welches ein Dekorelement mit Durchbrüchen in Form eines Schriftzuges aufweist, ist in der EP 2 295 293 A1 offenbart. Eine an der Rückseite des Dekorelements angebrachte lichtdurchlässige Folie greift in die Durchbrüche ein und ist dort mittels eines Leuchtmittels beleuchtbar.

Ein weiteres beleuchtbares Bauteil ist in CH 702 730 A1 gezeigt. Dieses Bauteil weist ein flächiges Dekorelement auf, dass wenigstens einen lichtundurchlässigen Bereich und mindestens einen lichtdurchlässigen Bereich aufweist. Beleuchtungsmittel dienen zum Beleuchten des wenigstens einen lichtdurchlässigen Bereichs. Zwischen dem Dekorelement und den Beleuchtungsmitteln ist eine lichtführende Schicht angeordnet. Das Bauteil weist Mittel auf, wie beispielsweise innerhalb der lichtführenden Schicht angeordnete lichtabsorbierende und / oder lichtstreuende Pigmente, welche Licht beim Transport von den Beleuchtungsmitteln zum genannten Rand im Wesentlichen vollständig absorbieren und / oder streuen. Damit kann Lecklicht an einem Rand des Bauteils sicher vermieden werden.

In WO 2014/122078 A1 wird ein beleuchtbares Anzeigeelement angegeben, welches eine flächig ausgebildete Abdeckung mit einem graphischen Element aufweist. Die Abdeckung weist zumindest eine sich von einer Fläche der Abdeckung nach oben hin erstreckende Erhebung auf, innerhalb welcher das graphische Element oberhalb eines Durchbruchs angeordnet ist, und/oder die Abdeckung weist zumindest eine sich von einer Fläche der Abdeckung nach unten hin erstreckende Vertiefung auf, innerhalb welcher das graphische Element unterhalb zumindest eines Durchbruchs angeordnet ist. Das graphische Element ist vom Durchbruch zumindest teilweise derart umschlossen, dass das graphische Element zumindest teilweise vom Licht eines Leuchtmittels des Bauteils umstrahlbar ist. Dieses beleuchtbare Anzeigeelement weist somit auf seiner Vorderseite einzelne graphische Elemente auf beziehungsweise einzelne Bereiche auf, welche optisch verbessert wahrnehmbar sind.

Insbesondere in Fahrzeugen ist es erstrebenswert, die Aufmerksamkeit der Fahrgäste nicht nur auf gewisse Bereiche der Vorderseite eines beleuchtbaren Bauteils, sondern auf das gesamte beleuchtbare Bauteil und insbesondere auf die gesamte Vorderseite des beleuchtbaren Bauteils zu lenken. Es handelt sich hierbei insbesondere um Bauteile, dessen Vorderseite dekorative Funktion aufweisen wie beispielsweise Einstiegsleisten im Bereich der Türen, des Kofferraums oder der Mittelkonsole.

Die JP 2006 160136 A offenbart ein beleuchtbares Bauteil, bei welchem Licht an der Sichtseite nach aussen gelangt, um zum Beispiel einen Schriftzug zu hinterleuchten. Zusätzlich gelangt peripheres Licht am Rand des Bauteils nach aussen.

### DARSTELLUNG DER ERFINDUNG

Es ist also eine Aufgabe der vorliegenden Erfindung, ein Bauteil anzugeben, welches insgesamt und insbesondere dessen Vorderseite optisch verbessert wahrnehmbar ist. Zur Lösung dieser Aufgabe wird ein Bauteil vorgeschlagen, wie es in Anspruch 1 angegeben ist. Vorteilhafte Ausgestaltungen der Erfindung sind in den abhängigen Ansprüchen angegeben.

Die vorliegende Erfindung stellt also ein beleuchtbares Bauteil zur Verfügung umfassend ein Basiselement welches eine Vorderseite und eine Rückseite des Bauteils bildet, einen das Basiselement umschliessenden Rand mit einer Aussenseite und einer Innenseite, wobei die Aussenseite unmittelbar an die Vorderseite anschliesst und die Innenseite unmittelbar an die Rückseite anschliesst, ein flächiges Dekorelement welches wenigstens einen Teilbereich der Vorderseite bildet sowie eine dem wenigstens einen Teilbereich der Vorderseite gegenüberliegende Hinterseite aufweist, einen an der Hinterseite des flächigen Dekorelementes angeordneten Lichtleiter sowie ein Beleuchtungsmittel zum Einkoppeln von Licht in den Lichtleiter, wobei der Lichtleiter sich wenigstens bis in einen Bereich des Randes erstreckt und wobei der Lichtleiter im Bereich des Randes Lichtumlenkstrukturen aufweist zum gezielten Abstrahlen von Licht von der Aussenseite des Randes.

Aufgrund des wenigstens bis in einen Bereich des Randes erstreckenden Lichtleiters, welcher im Bereich des Randes Lichtumlenkstrukturen zum gezielten Abstrahlen von Licht von der Aussenseite des Randes aufweist, ist die Vorderseite des Bauteils durch das von der Aussenseite des Randes abgestrahlte Licht wenigstens teilweise, bevorzugt vollständig, umstrahlbar. Dadurch kann das beleuchtbare Bauteil insgesamt und bevorzugt wenigstens ein Teilbereich der Vorderseite des Bauteils, bevorzugter die gesamte Vorderseite des Bauteils, in der Wahrnehmung des Betrachters im Vergleich zu anderen Bauteilen hervorgehoben werden.

Durch das Vorsehen von Lichtumlenkstrukturen beim Lichtleiter kann eine gezielte Lichtumlenkung des von dem Beleuchtungsmittel in den Lichtleiter eingekoppelten Lichtes in eine oder mehrere bestimmte Richtungen erreicht werden. Das Licht kann dadurch in eine oder mehrere einstellbare Richtungen und somit definiert aus dem Lichtleiter ausgekoppelt und entsprechend definiert bzw. gezielt von der Aussenseite des Randes des Bauteils abgestrahlt werden. Je nach Ausrichtung und Lage der Lichtumlenkstrukturen kann die Lichtauskopplung aus dem Lichtleiter derart eingestellt werden, dass sie zum Beispiel fokussiert aus dem Lichtleiter in eine bestimmte Richtung oder diffus in einen bestimmten Richtungsbereich erfolgt. Die Lichtumlenkstrukturen erlauben zudem, dass ein besonders grosser Anteil des Lichtes, welches innerhalb des Lichtleiters in den Bereich des Randes des Bauteils transportiert wird, von der Aussenseite des Bauteils abgestrahlt werden kann und somit das Bauteil insgesamt und bevorzugt wenigstens ein Teilbereich der Vorderseite des Bauteils, bevorzugter die gesamte Vorderseite des Bauteils, optisch besonders gut wahrnehmbar ist.

Im Falle, dass die Vorderseite des Bauteils, bevorzugt in der Draufsicht auf die Vorderseite des Bauteils gesehen, vollständig durch das von der Aussenseite des Randes abgestrahlte Licht umstrahlbar ist, so ergibt sich, aufgrund des die Vorderseite des Bauteils umrahmenden Lichtes, insbesondere eine derartige optische Wirkung, dass das gesamte Bauteil und insbesondere die gesamte Vorderseite des Bauteils im Vergleich zu einer Fläche, wie beispielsweise die Fläche eines Fahrzeuges, auf welcher das Bauteil angeordnet ist, als abgehoben oder sogar darüber schwebend erscheint. Das gesamte Bauteil und insbesondere die gesamte Vorderseite des Bauteils erscheint somit als wäre das gesamte Bauteil und insbesondere die gesamte Vorderseite des Bauteils losgelöst von der umgebenden Fläche auf welcher das Bauteil angeordnet ist. Die somit erzeugte optische Wirkung führt zu einem auffälligeren Erscheinungsbild des beleuchteten Bauteils. Das beleuchtete Bauteil zieht dadurch die Aufmerksamkeit des Betrachters auf sich, wodurch die optische Wahrnehmbarkeit des beleuchteten Bauteils verbessert ist.

Das Merkmal, dass das Dekorelement des Bauteiles flächig ausgebildet ist, bedeutet, dass das Dekorelement entlang von zwei Dimensionen wesentlich grösser, insbesondere um ein Vielfaches grösser, dimensioniert ist als entlang einer dritten Dimension, welche sich in der Regel senkrecht zur Flächenausdehnung der Vorderseite des Dekorelementes erstreckt. Das flächige Dekorelement ist beispielsweise bandförmig, insbesondere als Band, ausgebildet.

Nach einer Weiterbildung der Erfindung bildet das flächige Dekorelement einen Teilbereich der Aussenseite des Randes. Gemäss einer bevorzugten Variante bilden das flächige Dekorelement und wenigstens ein weiterer Bestandteil des Bauteils gemeinsam die gesamte Aussenseite des Randes. Der weitere Bestandteil ist beispielsweise der Lichtleiter oder ein Gehäuse. Gemäss einer bevorzugten Untervariante bilden das flächige Dekorelement und der Lichtleiter die gesamte Aussenseite des Randes. Gemäss einer weiteren bevorzugten Untervariante bilden das flächige Dekorelement, der Lichtleiter und das Gehäuse die gesamte Aussenseite des Randes.

Nach einer Weiterbildung der Erfindung bildet das flächige Dekorelement die gesamte Aussenseite des Randes. In diesem Fall ist das Bauteil besonders dekorativ sowie die Gefahr der Beschädigung des Bauteiles als auch das Eindringen von Verschmutzungen, wie beispielsweise Flüssigkeiten oder Feststoffe, in das Bauteil vermindert. Falls das flächige Dekorelement die gesamte Aussenseite des Randes bildet, so ist das flächige Dekorelement wenigstens bereichsweise für sichtbares Licht durchlässig ausgebildet. Das flächige Dekorelement ist dann beispielsweise wenigstens bereichsweise aus einem Material hergestellt, welches für sichtbares Licht durchlässig ist.

Nach einer Weiterbildung der Erfindung weist das flächige Dekorelement wenigstens einen Durchbruch auf. Bevorzugt ist der Durchbruch als eine durchgehende Öffnung im flächigen Dekorelement zu verstehen. Bevorzugt ist der Durchbruch langgestreckt ausgebildet mit einer wesentlich grösseren, insbesondere einer um ein Vielfaches grösseren, Längenausdehnung entlang einer ersten Richtung als entlang einer beispielsweise senkrecht zur ersten Richtung stehenden zweiten Richtung. Der Durchbruch ist dann also beispielsweise als Langloch oder als Schlitz ausgebildet. Falls das flächige Dekorelement wenigstens einen Durchbruch aufweist, so ist das flächige Dekorelement bevorzugt aus einem lichundurchlässigen Material hergestellt.

Bevorzugt weist das flächige Dekorelement im Bereich der Vorderseite wenigstens einen Durchbruch auf.

Falls das flächige Dekorelement einen Teilbereich der Aussenseite des Randes bildet, so weist das flächige Dekorelement bevorzugt im Bereich der Aussenseite wenigstens einen

Durchbruch auf. Bevorzugt bildet dann das flächige Dekorelement die gesamte Aussenseite des Randes mit Ausnahme im Bereich des wenigstens einen Durchbruchs.

Über den Durchbruch kann das vom Beleuchtungsmittel emittierte Licht durch das flächige Dekorelement hindurchtreten und vom flächigen Dekorelement, insbesondere vom Teilbereich der Vorderseite des Bauteils welcher durch das flächige Dekorelement gebildet ist und / oder vom Teilbereich der Aussenseite des Bauteils, welcher durch das flächige Dekorelement gebildet ist, abgestrahlt werden.

Bevorzugt greift der Lichtleiter in wenigstens einen Durchbruch des wenigstens einen Durchbruchs ein. Dies bewirkt den Vorteil, dass die Gefahr reduziert ist, dass beispielsweise Flüssigkeiten und / oder Feststoffe über den Durchbruch in das Innere des Bauteils gelangen können. Bevorzugt bildet der wenigstens eine Durchbruch, bevorzugt im Bereich der Vorderseite und / oder im Bereich der Aussenseite, wenigstens ein graphisches Element. Beim graphischen Element kann es sich beispielsweise um ein Symbol, ein Ornament, einen Buchstaben, einen Schriftzug oder um ein Logo handeln. Der wenigstens eine Durchbruch im flächigen Dekorelement ist beispielsweise mittels Stanzen, Laser oder Ätzen gebildet.

Bevorzugt umschliesst wenigstens ein Durchbruch des wenigstens einen Durchbruchs das Basiselement bzw. die durch das Basiselement gebildete Vorderseite, bevorzugt in der Draufsicht auf die Vorderseite gesehen, wenigstens teilweise. Bevorzugter umschliesst wenigstens ein Durchbruch des wenigstens einen Durchbruchs das Basiselement bzw. die durch das Basiselement gebildete Vorderseite, bevorzugt in der Draufsicht auf die Vorderseite gesehen, vollständig.

Falls der Durchbruch das Basiselement bzw. die durch das Basiselement gebildete Vorderseite, bevorzugt in der Draufsicht auf die Vorderseite gesehen, teilweise umschliesst, kann das vom Beleuchtungsmittel emittierte Licht durch den Durchbruch hindurchtreten und teilweise die Vorderseite umstrahlen und somit ist das Bauteil insgesamt und insbesondere dessen gesamte Vorderseite optisch verbessert wahrnehmbar. Falls der Durchbruch das Basiselement bzw. die durch das Basiselement gebildete Vorderseite, bevorzugt in der Draufsicht auf die Vorderseite gesehen, vollständig umschliesst, kann das vom Beleuchtungsmittel emittierte Licht durch den Durchbruch hindurchtreten und vollständig die Vorderseite umstrahlen und somit ergibt sich, aufgrund des die Vorderseite umrahmenden Lichtes, insbesondere eine derartige optische Wirkung, dass das gesamte Bauteil und insbesondere die gesamte Vorderseite des Bauteils im Vergleich zu einer Fläche, wie beispielsweise die Fläche eines Fahrzeuges oder eines Haushaltsgerätes, auf welcher das Bauteil angeordnet ist, als abgehoben oder sogar darüber schwebend erscheint.

Bevorzugt ist innerhalb wenigstens eines Durchbruchs des wenigstens einen Durchbruchs, bevorzugt im Bereich der Vorderseite und / oder der Aussenseite, wenigstens ein inselförmiger Teil angeordnet. Durch das Vorsehen eines inselförmigen Teils kann das Bauteil, bevorzugt die Vorderseite und / oder die Aussenseite des Bauteils, dekorativer gestaltet werden. Der inselförmige Teil ist bevorzugt durch das flächige Dekorelement gebildet. Dies bietet den Vorteil, dass das Bauteil einfacher herstellbar ist. Bevorzugt greift der Lichtleiter in den Durchbruch ein, so dass der inselförmige Teil, bevorzugt in der Draufsicht auf die Vorderseite und / oder die Aussenseite gesehen, wenigstens teilweise, bevorzugt vollständig, durch den in den Durchbruch eingreifenden Lichtleiter umschlossen ist. Falls der Lichtleiter in den Durchbruch derart eingreift, dass der inselförmige Teil, bevorzugt in der Draufsicht auf die Vorderseite und / oder auf die Aussenseite gesehen, teilweise durch den Lichtleiter umschlossen ist, so umstrahlt das von dem Beleuchtungsmittel emittierte Licht teilweise den inselförmigen Teil und somit ist der inselförmige Teil optisch verbessert wahrnehmbar. Falls der Lichtleiter in den Durchbruch derart eingreift, dass der inselförmige Teil, bevorzugt in der Draufsicht auf die Vorderseite und / oder auf die Aussenseite gesehen, vollständig durch den Lichtleiter umschlossen ist, so umstrahlt das von dem Beleuchtungsmittel emittierte Licht vollständig den inselförmigen Teil. Somit umstrahlt das vom Beleuchtungsmittel emittierte Licht vollständig den inselförmigen Teil und somit ergibt sich, aufgrund des den inselförmigen Teil umrahmenden Lichtes, insbesondere eine derartige optische Wirkung, dass der inselförmige Teil im Vergleich zur Oberfläche, insbesondere im Vergleich zu der an den Durchbruch angrenzenden Oberfläche, des flächigen Dekorelementes, welches den Durchbruch bildet, als abgehoben oder sogar darüber schwebend erscheint. Die genannte Oberfläche ist beispielsweise die Vorderseite und / oder die Aussenseite welche durch das flächige Dekorelement gebildet ist.

Bevorzugt ist der inselförmige Teil mit dem den inselförmigen Teil wenigstens teilweise umschliessenden Lichtleiter bündig. Bevorzugt ist der inselförmige Teil mit dem den inselförmigen Teil vollständig umschliessenden Lichtleiter bündig. Bevorzugt ist die an den Durchbruch angrenzende und durch das flächige Dekorelement gebildete Oberfläche bündig mit dem den inselförmigen Teil wenigstens teilweise umgebenden Lichtleiter. Die genannte Oberfläche ist beispielsweise die Vorderseite und / oder die Aussenseite.

Bevorzugt ist wenigstens im Bereich wenigstens eines Durchbruchs des wenigstens einen Durchbruchs auf der Hinterseite des flächigen Dekorelementes wenigstens eine Folie aufgebracht. Die Folie überspannt somit den Durchbruch. Bevorzugt greift die Folie wenigstens teilweise in wenigstens einen Durchbruch des wenigstens einen Durchbruchs ein.

Bevorzugt bildet das flächige Dekorelement zusammen mit der wenigstens einen Folie einen Verbund aus wenigstens zwei Schichten. Mittels dieser Folie kann das Bauteil gegenüber Verunreinigungen, wie Schmutz und Wasser, nach aussen hin abgedichtet werden. Bevorzugt ist wenigstens im Bereich wenigstens eines Durchbruches des wenigstens einen Durchbruchs auf der Hinterseite des flächigen Dekorelementes wenigstens eine Folie aufgebracht, wobei wenigstens im Bereich wenigstens eines Durchbruches des wenigstens einen Durchbruchs auf einer Rückseite der Folie der Lichtleiter aufgebracht ist.

Bevorzugt bilden das flächige Dekorelement, die wenigstens eine Folie und der Lichtleiter einen Verbund von wenigstens drei Schichten. Bevorzugt greift die Folie und / oder der Lichtleiter in wenigstens einen Durchbruch des wenigstens einen Durchbruch ein. Bevorzugt greift der Lichtleiter in die Folie ein. Durch das Eingreifen kann eine optisch noch ansprechendere Ausgestaltung des Bauteils erreicht werden. Zudem bietet das Eingreifen den Vorteil, dass die Gefahr vermindert ist, dass beispielsweise Feststoffe und / oder Flüssigkeiten in das Bauteil gelangen können.

Bevorzugt greift die Folie und / oder der Lichtleiter soweit in den Durchbruch ein, dass die Folie und / oder der Lichtleiter im Bereich wenigstens eines Durchbruchs des wenigstens einen Durchbruchs mit der an den Durchbruch angrenzenden und durch das flächige Dekorelement gebildeten Oberfläche bündig ist. Die Oberfläche ist beispielsweise die Vorderseite und / oder die Aussenseite. Falls die Oberfläche die Vorderseite und / oder die Aussenseite ist, bildet somit die eingreifende, bündige Folie bzw. der eingreifende, bündige Lichtleiter einen Teilbereich der Vorderseite und / oder einen Teilbereich der Aussenseite. Dies bietet den Vorteil, dass die Gefahr vermindert ist, dass beispielsweise Feststoffe und / oder Flüssigkeiten in das Bauteil gelangen können.

Bevorzugt füllt die Folie wenigstens einen Durchbruch des wenigstens einen Durchbruchs teilweise aus. Bevorzugter füllt die Folie wenigstens einen Durchbruch des wenigstens einen Durchbruchs vollständig aus. Dies bietet den Vorteil, dass die Gefahr vermindert ist, dass beispielsweise Feststoffe und / oder Flüssigkeiten in das Bauteil gelangen können.

Bevorzugt ist die Folie eine Kunststofffolie. Diese kann farblos bzw. weiss oder auch eingefärbt sein. Durch eingefärbte Kunststofffolien können bunte graphische Elemente hergestellt werden. Die Folie kann ein- oder mehrschichtig sein. Möglich ist eine Ausfuhrungsform mit mehreren Folien, die gleich oder unterschiedlich sind. Gemäss einer bevorzugten Variante ist die Folie wenigstens bereichsweise für Licht durchscheinend bzw. transluzent ausgebildet. Gemäss einer weiteren bevorzugten Variante ist die Folie lichtundurchlässig bzw. opak ausgebildet. Bevorzugt weist die Folie eine Dicke von 0.05 Millimeter bis 1 Millimeter, bevorzugter von 0.1 Millimeter bis 0.3 Millimeter, auf. Die Folie ist beispielsweise aus ABS, Polykarbonat oder PMMA hergestellt.

Um einen optisch einheitlichen Eindruck zu erwecken, weist der Lichtleiter und / oder die Folie bevorzugt zumindest im Bereich des Durchbruchs eine Oberflächenbeschichtung auf, welche zumindest annähernd denselben optischen Eindruck bewirkt, wie das Material, aus welchem das flächige Dekorelement hergestellt ist. Bei Tageslicht, wenn das Bauteil nicht beleuchtet ist, ist dadurch der wenigstens eine Durchbruch für den Betrachter weniger gut erkennbar, wodurch das Bauteil einen einheitlicheren, ansprechenden Eindruck für den Betrachter ergibt. Die Folie kann dabei insbesondere metallisiert sein. Bevorzugt ist der Lichtleiter als Folie ausgebildet, welcher dazu dient, vom Beleuchtungsmittel ausgestrahltes Licht zu einen Durchbruch hinzuleiten. Die Folie kann beispielsweise als Diffusor ausgebildet sein, um das vom Beleuchtungsmittel abgestrahlte Licht zu streuen.

Bevorzugt füllt der Lichtleiter wenigstens einen Durchbruch des wenigstens einen Durchbruchs wenigstens teilweise aus. Bevorzugter füllt der Lichtleiter wenigstens einen Durchbruch des wenigstens einen Durchbruchs vollständig aus. Dies bietet den Vorteil, dass die Gefahr vermindert ist, dass beispielsweise Feststoffe und / oder Flüssigkeiten in das Bauteil gelangen können.

Das Beleuchtungsmittel ist bevorzugt wenigstens teilweise, bevorzugter im Wesentlichen vollständig, noch bevorzugter vollständig, im Lichtleiter eingebettet. Dies erlaubt eine besonders kompakte Bauweise des Bauteils. Zudem ist das Beleuchtungsmittel von äusseren Einflüssen geschützt. Des Weiteren erlaubt diese Anordnung eine optimale wenigstens teilweise, insbesondere vollständige Umstrahlung der Vorderseite.

Bevorzugt ist der inselförmige Teil vom Lichtleiter und / oder von der Folie getragen. Bevorzugt ist der inselförmige Teil am Lichtleiter und / oder an der Folie befestigt. Dies erlaubt eine einfachere Herstellung des Bauteils.

Nach einer Weiterbildung der Erfindung umschliesst der Rand das Basiselement, bevorzugt in der Draufsicht auf die Vorderseite gesehen, wenigstens teilweise, bevorzugt vollständig.

Falls der Rand das Basiselement, bevorzugt in der Draufsicht auf die Vorderseite gesehen, wenigstens teilweise umschliesst, so umschliesst der Rand ebenfalls, bevorzugt in der Draufsicht auf die Vorderseite gesehen, die durch das Basiselement gebildete Vorderseite wenigstens teilweise. Falls der Rand das Basiselement, bevorzugt in der Draufsicht auf die Vorderseite gesehen, vollständig umschliesst, so umschliesst der Rand ebenfalls, bevorzugt in der Draufsicht auf die Vorderseite gesehen, die durch das Basiselement gebildete Vorderseite vollständig.

Das Basiselement weist bevorzugt eine umlaufende Seitenfläche auf, welche bevorzugt die Vorderseite mit der Rückseite verbindet. Der Rand ist am Basiselement, insbesondere an der Seitenfläche des Basiselementes, befestigt. Bevorzugt weist das Basiselement insgesamt beispielsweise eine im Wesentlichen würfelförmige, zylinderförmige oder quaderförmige Gestalt, bevorzugter eine im Wesentlichen quaderförmige Gestalt, auf. Grundsätzlich kann das Basiselement eine beliebige Gestalt aufweisen. Grundsätzlich kann der Rand ebenfalls eine beliebige Gestalt aufweisen.

Nach einer Weiterbildung der Erfindung bildet der Lichtleiter wenigstens einen äussersten Bereich der Aussenseite des Randes.

Falls der äusserste Bereich der Aussenseite des Randes durch den Lichtleiter gebildet ist und falls der Rand das Basiselement bzw. die durch das Basiselement gebildete Vorderseite, bevorzugt in der Draufsicht auf die Vorderseite gesehen, teilweise umschliesst, so umstrahlt das von dem Beleuchtungsmittel emittierte Licht wenigstens teilweise die Vorderseite und somit ist das Bauteil insgesamt und insbesondere dessen gesamte Vorderseite optisch verbessert wahrnehmbar.

Falls der äusserste Bereich der Aussenseite des Randes durch den Lichtleiter gebildet ist und falls der Rand das Basiselement bzw. die durch das Basiselement gebildete Vorderseite, bevorzugt in der Draufsicht auf die Vorderseite gesehen, vollständig umschliesst, so umstrahlt das vom Beleuchtungsmittel emittierte Licht vollständig die Vorderseite und somit ergibt sich, aufgrund des die Vorderseite umrahmenden Lichtes, insbesondere eine derartige optische Wirkung, dass das gesamte Bauteil und insbesondere die gesamte Vorderseite im Vergleich zu einer Fläche, wie beispielsweise die Fläche eines Fahrzeuges, auf welcher das Bauteil angeordnet ist, als abgehoben oder sogar darüber schwebend erscheint.

Nach einer Weiterbildung der Erfindung erstreckt sich der Lichtleiter im Wesentlichen über die gesamte Hinterseite des flächigen Dekorelementes. Ein solches Bauteil ist besonders einfach herstellbar.

Nach einer Weiterbildung der Erfindung ist der Lichtleiter einstückig ausgebildet.

Nach einer Weiterbildung der Erfindung ist der Lichtleiter an der Hinterseite des flächigen Dekorelementes befestigt. Zwischen der Hinterseite des flächigen Dekorelementes und einer Vorderseite des Lichtleiters kann beispielsweise wenigstens bereichsweise eine Klebeschicht angeordnet sein, mittels welcher der Lichtleiter an der Hinterseite des flächigen Dekorelementes befestigt ist. Diese Klebeschicht ist bevorzugt wenigstens bereichsweise transluzent, so dass das von dem Beleuchtungsmittel emittierte Licht durch die Klebeschicht hindurchtreten kann. Die Verwendung von Klebstoff ist insbesondere vorteilhaft, falls das flächige Dekorelement beispielsweise aus Metall, insbesondere aus Stahl oder Edelstahl, hergestellt ist. Bevorzugt ist der Lichtleiter an der Hinterseite des flächigen Dekorelementes angespritzt, insbesondere mittels Spitzguss angespritzt. Dies bietet den Vorteil, dass das Bauteil einfacher herstellbar ist.

Nach einer Weiterbildung der Erfindung ist zwischen der Hinterseite des flächigen Dekorelementes und einer Vorderseite des Lichtleiters wenigstens bereichsweise ein Spalt angeordnet, welcher bevorzugt mit Luft gefüllt ist. Diese Weiterbildung der Erfindung bietet den Vorteil, dass die Leitung des Lichtes innerhalb des Lichtleiters verbessert ist.

Nach einer Weiterbildung der Erfindung bildet das flächige Dekorelement zusammen mit dem Lichtleiter einen Verbund von wenigstens zwei Schichten.

Nach einer Weiterbildung der Erfindung schliesst wenigstens ein Teilbereich der Aussenseite des Randes, welcher unmittelbar an die Vorderseite anschliesst, mit der Vorderseite einen Winkel von 90° - 270°, bevorzugt einen Winkel von 120° - 270°, ein.

Nach einer Weiterbildung der Erfindung schliesst wenigstens ein Teilbereich der Innenseite des Randes, welcher unmittelbar an die Rückseite anschliesst, mit der Rückseite einen Winkel von 90° - 270°, bevorzugt einen Winkel von 90° - 180°, ein.

Nach einer Weiterbildung der Erfindung weist der Lichtleiter einen Grundkörper mit einer äusseren Oberfläche auf, wobei auf der äusseren Oberfläche die Lichtumlenkstrukturen angeordnet sind. Die Lichtumlenkstrukturen sind beispielsweise auf die äussere Oberfläche des Grundkörpers aufgedruckt. Der Grundkörper und die Lichtumlenkstrukturen bilden somit gemeinsam den Lichtleiter.

Der Lichtleiter kann Erhebungen und / oder Vertiefungen aufweisen, welche als Lichtumlenkstrukturen ausgebildet sind. Diese Lichtumlenkstrukturen bilden einen Oberflächenbereich des Lichtleiters. Alternativ können die Lichtumlenkstrukturen innerhalb des Lichtleiters angeordnet sein. Diese Lichtumlenkstrukturen sind unempfindlich gegenüber Beschädigungen des Lichtleiters. Lichtumlenkstrukturen, welche innerhalb des Lichtleiters angeordnet sind, werden mittels Laser hergestellt. Bevorzugt werden die Lichtumlenkstrukturen, welche innerhalb des Lichtleiters angeordnet sind, mittels grünem Laserlicht hergestellt. Durch das grüne Laserlicht kann eine optimale Form der innerhalb des Lichtleiters angeordneten Lichtumlenkstrukturen erzielt werden.

Nach einer Weiterbildung der Erfindung sind die Lichtumlenkstrukturen derart ausgebildet und angeordnet, dass das vom Beleuchtungsmittel emittierte und innerhalb des Lichtleiters zum Bereich des Randes geleitete Licht im Bereich des Randes zumindest einmal seine Fortpflanzungsrichtung ändert.

Nach einer Weiterbildung der Erfindung bildet der Lichtleiter wenigstens einen Teilbereich der Rückseite und / oder der Innenseite.

Nach einer Weiterbildung der Erfindung ist das flächige Dekorelement opak ausgebildet. Das flächige Dekorelement ist somit lichtundurchlässig ausgebildet.

Nach einer Weiterbildung der Erfindung ist das flächige Dekorelement einstückig oder mehrstückig, bevorzugt einstückig, ausgebildet. Falls das flächige Dekorelement einstückig ausgebildet ist, so ist das Bauteil dadurch einfacher herstellbar.

Nach einer Weiterbildung der Erfindung schliesst die Aussenseite unmittelbar an die Innenseite an.

Nach einer Weiterbildung der Erfindung ist das Bauteil als eine Zierleiste, ein Bedienelement, wie beispielsweise eine Taste, und insbesondere bevorzugt als eine Fuss- oder Einstiegsleiste eines Fahrzeuges ausgebildet. Das Bauteil kann beispielsweise aber auch als eine Zierleiste oder ein Bedienelement eines Haushaltsgerätes, wie beispielsweise eines Kühlschrankes, eines Dampfgarers, einer Waschmaschine, eines Backofens, eines Kochherdes, einer Geschirrspülmaschine oder eines Möbels ausgebildet sein.

Nach einer Weiterbildung der Erfindung ist das Beleuchtungsmittel in einem Bereich der Hinterseite des flächigen Dekorelementes angeordnet.

Nach einer Weiterbildung der Erfindung ist das Beleuchtungsmittel in einem Bereich der Rückseite angeordnet.

Nach einer Weiterbildung der Erfindung ist das Beleuchtungsmittel in einem Bereich der Innenseite angeordnet.

Nach einer Weiterbildung der Erfindung ist das Beleuchtungsmittel wenigstens eine Leuchtdiode. Das Beleuchtungsmittel kann beispielsweise auch eine Leuchtfolie, insbesondere eine Elektrolumineszenzfolie oder OLED, oder eine Glühbirne sein.

Nach einer Weiterbildung der Erfindung ist das Beleuchtungsmittel derart zum Lichtleiter angeordnet, dass das vom Beleuchtungsmittel ausgestrahlte Licht ausschliesslich auf indirektem Weg, d.h. via Reflexionen innerhalb des Lichtleiters, vom Beleuchtungsmittel aus zu den Lichtumlenkstrukturen hingelangen kann.

Nach einer Weiterbildung der Erfindung ist der Lichtleiter aus einem transluzenten Material, bevorzugt aus einem transparenten Material, hergestellt. Das Material ist beispielsweise Kunststoff oder Glas, bevorzugt Kunststoff. Bevorzugt ist der Kunststoff ein Thermoplast, ein Duroplast oder ein Elastomer, bevorzugter ein Thermoplast.

Nach einer Weiterbildung der Erfindung weist der Lichtleiter eine Dicke von 1 Millimeter oder grösser auf.

Nach einer Weiterbildung der Erfindung ist auf der Vorderseite und / oder auf der Aussenseite wenigstens bereichsweise, bevorzugt vollflächig, eine Schutzschicht, wie beispielsweise eine Folie oder ein Lack, angeordnet. Bevorzugt ist die Schutzschicht von der Vorderseite und / oder von der Aussenseite ablösbar, bevorzugter von Hand ablösbar. Bevorzugt ist die Schutzschicht transluzent, bevorzugter transparent, ausgebildet.

Nach einer Weiterbildung der Erfindung ist das flächige Dekorelement aus einem Metall, wie insbesondere Aluminium, Stahl oder Edelstahl, hergestellt. Das flächige Dekorelement kann aber auch aus einem Kunststoff oder aus einem anderen Material, wie beispielsweise Holz, hergestellt sein. Das flächige Dekorelement ist beispielsweise bandförmig bzw. als Band ausgestaltet. Im Falle von Metall oder Kunststoff ist das flächige Dekorelement beispielsweise eine flexible Folie oder ein selbsttragendes Bauteil. Ein selbsttragendes Bauteil ist im Falle von Metall beispielsweise ein Metallblech. Das Metallblech weist bevorzugt wenigstens einen Durchbruch auf. Falls das flächige Dekorelement aus Kunststoff hergestellt ist, kann das flächige Dekorelement wenigstens teilweise durchscheinend sein und / oder wenigstens einen Durchbruch aufweisen.

Nach einer Weiterbildung der Erfindung weist das flächige Dekorelement eine Dicke von einem Millimeter oder kleiner auf.

Das oben genannte Holz wird beispielsweise hergestellt, indem das Holz in einem Autoklaven angeordnet und in den Autoklaven Wasserdampf eingeleitet wird, welches auf das Holz einwirkt. Nach der Entnahme des mit Wasserdampf bearbeiteten Holzes aus dem Autoklaven wird das bearbeitete Holz umgeformt und dann getrocknet.

Nach einer Weiterbildung der Erfindung bildet das flächige Dekorelement die gesamte Vorderseite.

Nach einer Weiterbildung der Erfindung bilden das flächige Dekorelement und der Lichtleiter die gesamte Vorderseite.

Nach einer Weiterbildung der Erfindung verbindet die Innenseite des Randes die Aussenseite des Randes mit der Rückseite.

Nach einer Weiterbildung der Erfindung bildet die Vorderseite und / oder die Aussenseite wenigstens einen Teilbereich einer Sichtseite des Bauteils, bevorzugt die gesamte Sichtseite des Bauteils, insbesondere im Einbauzustand des Bauteils. Das Bauteil kann beispielsweise bei einem Fahrzeug oder einem Haushaltsgerät eingebaut bzw. verbaut sein. Bevorzugt ist die Fläche der Vorderseite, bevorzugt in der Draufsicht auf die Vorderseite gesehen, grösser als die Fläche der Aussenseite. Bevorzugter ist die Fläche der Vorderseite, bevorzugt in der Draufsicht auf die Vorderseite gesehen, um ein Vielfaches grösser als die Fläche der Aussenseite.

Die vorliegende Erfindung gibt zudem ein Fahrzeug an, welches das erfindungsgemässe beleuchtbare Bauteil umfasst welches wie ausgeführt ausgebildet ist. Das Kraftfahrzeug weist eine Oberfläche auf, wobei bevorzugt die Rückseite und / oder die Innenseite wenigstens teilweise auf der Oberfläche aufliegt.

Bevorzugt ist wenigstens ein Teilbereich der Rückseite und / oder wenigstens ein Teilbereich der Innenseite, bevorzugter wenigstens ein Teilbereich der Innenseite, welcher auf der Oberfläche aufliegt, durch den Lichtleiter gebildet. Beim Fahrzeug handelt es sich bevorzugt um ein Kraftfahrzeug, bevorzugter um ein strassengebundenes Kraftfahrzeug.

Nach einer Weiterbildung der Erfindung ist das Bauteil in einem Innenbereich und / oder in einem Aussenbereich des Fahrzeuges angeordnet.

Nach einer Weiterbildung der Erfindung bildet die Vorderseite und / oder die Aussenseite, bevorzugt in der Draufsicht auf die Vorderseite gesehen, wenigstens einen Teilbereich der Sichtseite des Bauteils, bevorzugt die gesamte Sichtseite des Bauteils, insbesondere im Einbauzustand des Bauteils.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: schematisch eine räumliche Ansicht einer ersten Ausführungsform eines erfindungsgemässen Bauteils;
- Fig. 2: schematisch einen Querschnitt durch das Bauteil gemäss der Figur 1;
- Fig. 3: schematisch eine Draufsicht auf die Vorderseite des Bauteils gemäss der Figur 1;
- Fig. 4: schematisch eine räumliche Ansicht einer zweiten Ausführungsform eines erfindungsgemässen Bauteils;
- Fig. 5: schematisch einen Querschnitt durch das Bauteil gemäss der Figur 4;
- Fig. 6: schematisch eine Draufsicht auf die Vorderseite des Bauteils gemäss der Figur 4;
- Fig. 7: schematisch die Herstellung des erfindungsgemässen Bauteils gemäss den Figuren 4, 5, 6;
- Fig. 8: schematisch eine räumliche Ansicht einer dritten Ausführungsform eines nicht erfindungsgemässen Bauteils;
- Fig. 9: schematisch einen Querschnitt durch das Bauteil gemäss der Figur 8;
- Fig. 10: schematisch eine Draufsicht auf die Vorderseite des Bauteils gemäss der Figur 8.

### BESCHREIBUNG BEVORZUGTER AUSFÜHRUNGSFORMEN

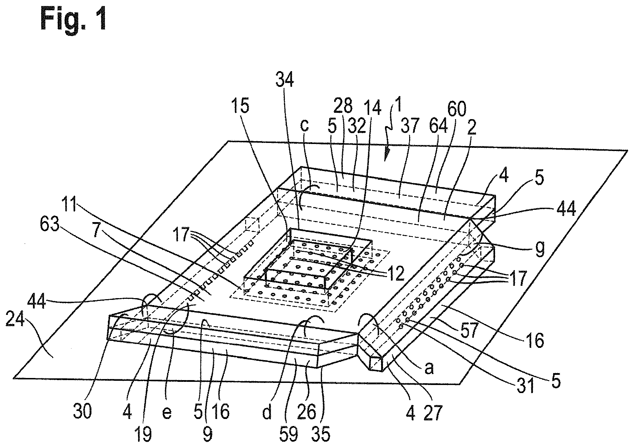

Bei den im Folgenden in den schematischen Figuren 1 bis 10 gezeigten Ausführungsformen sind gleiche, ähnliche oder ähnlich wirkende Merkmale jeweils mit den gleichen Bezugszeichen versehen.

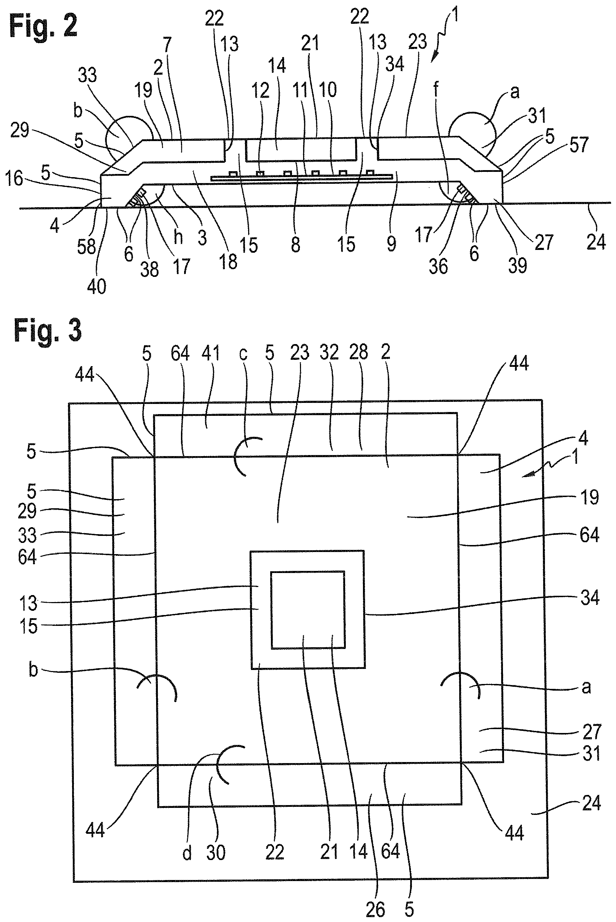

Die Figur 1 zeigt schematisch eine räumliche Ansicht einer ersten Ausführungsform eines erfindungsgemässen Bauteils. Die Figur 2 zeigt schematisch einen Querschnitt durch das Bauteil gemäss Figur 1. Die Figur 3 zeigt schematisch eine Draufsicht auf eine Vorderseite des Bauteils gemäss Figur 1.

Das erfindungsgemässe beleuchtbare Bauteil 1 gemäss den Figuren 1, 2, 3 weist eine im Wesentlichen plane Vorderseite 2 und eine im Wesentlichen plane Rückseite 3 auf. Die Vorderseite 2 und die Rückseite 3 sind im Wesentlichen parallel zueinander angeordnet. Das Bauteil 1 umfasst ein Basiselement 63, welches insgesamt eine im Wesentlichen quaderförmige Gestalt aufweist. Das Basiselement 63 bildet die Vorderseite 2 und die Rückseite 3 und umfasst eine umlaufende Seitenfläche 64. Das Bauteil 1 weist zudem einen Rand 4 auf, welcher an der Seitenfläche 64 des Basiselementes 63 befestigt ist. Der Rand 4 weist eine Aussenseite 5 und eine Innenseite 6 auf, wobei die Aussenseite 5 unmittelbar an die Vorderseite 2 anschliesst und die Innenseite 6 unmittelbar an die Rückseite 3 anschliesst. Wie in den Figuren 1, 2 ersichtlich, verbindet die Innenseite 6 des Randes 4 die Aussenseite 5 des Randes 4 mit der Rückseite 3. Die Vorderseite 2 und die Aussenseite 5 bilden gemeinsam die gesamte Sichtseite 41 des Bauteils 1.

Der Rand 4 des Bauteils 1 gemäss den Figuren 1, 2, 3 umfasst vier Abschnitte, nämlich einen ersten Abschnitt 26, einen zweiten Abschnitt 27, einen dritten Abschnitt 28 sowie einen vierten Abschnitt 29. Selbstverständlich kann der Rand 4 auch weniger oder mehr als vier Abschnitte aufweisen. Wie in Figur 3 erkennbar, umschliesst der Rand 4, in der Draufsicht auf die Vorderseite 2 gesehen, die Vorderseite 2 teilweise, da im Bereich der Ecken 44 der Vorderseite 2 der erste Abschnitt 26 nicht mit dem zweiten Abschnitt 27, der zweite Abschnitt 27 nicht mit dem dritten Abschnitt 28, der dritte Abschnitt 28 nicht mit dem vierten Abschnitt 29 sowie der vierte Abschnitt 29 nicht mit dem ersten Abschnitt 26 verbunden ist.

Der erste Abschnitt 26 des Randes 4 bildet einen ersten, plan ausgebildeten Teilbereich 30 der Aussenseite 5, welcher unmittelbar an die Vorderseite 2 anschliesst. Der zweite Abschnitt 27 des Randes 4 bildet einen zweiten, plan ausgebildeten Teilbereich 31 der Aussenseite 5, welcher unmittelbar an die Vorderseite 2 anschliesst. Der dritte Abschnitt 28 des Randes 4 bildet einen dritten, plan ausgebildeten Teilbereich 32 der Aussenseite 5, welcher unmittelbar an die Vorderseite 2 anschliesst, und der vierte Abschnitt 29 des Randes 4 bildet einen vierten, plan ausgebildeten Teilbereich 33 der Aussenseite 5, welcher unmittelbar an die Vorderseite 2 anschliesst.

Wie in Figuren 1, 2, 3 ersichtlich, bildet der erste Teilbereich 30 der Aussenseite 5 mit der Vorderseite 2 einen Winkel d von ca. 150°. Der zweite Teilbereich 31 der Aussenseite 5 bildet mit der Vorderseite 2 einen Winkel a von ca. 219°, der dritte Teilbereich 32 der Aussenseite 5 bildet mit der Vorderseite 2 einen Winkel c von 180° und der vierte Teilbereich 33 der Aussenseite 5 bildet mit der Vorderseite 2 einen Winkel b von ca. 219°.

Der erste Abschnitt 26 des Randes 4 bildet einen ersten, plan ausgebildeten Teilbereich 35 der Innenseite 6 welcher unmittelbar an die Rückseite 3 anschliesst. Der zweite Abschnitt 27 des Randes 4 bildet einen zweiten, plan ausgebildeten Teilbereich 36 der Innenseite 6, welcher unmittelbar an die Rückseite 3 anschliesst, der dritte Abschnitt 28 des Randes 4 bildet einen dritten, plan ausgebildeten Teilbereich 37 der Innenseite 6, welcher unmittelbar an die Rückseite 3 anschliesst, und der vierte Abschnitt 29 des Randes 4 bildet einen vierten, plan ausgebildeten Teilbereich 38 der Innenseite 6, welcher unmittelbar an die Rückseite 3 anschliesst.

Wie in Figuren 1 und 2 ersichtlich, bildet der erste Teilbereich 35 der Innenseite 6 mit der Rückseite 3 einen Winkel e von ca. 210°. Der zweite Teilbereich 36 der Innenseite 6 bildet mit der Rückseite 3 einen Winkel f von ca. 120°, der dritte Teilbereich 37 der Innenseite 6 bildet mit der Rückseite 3 einen Winkel g von 180°, und der vierte Teilbereich 38 bildet mit der Innenseite 6 einen Winkel h von ca. 120°.

An den zweiten Teilbereich 36 der Innenseite 6 schliesst unmittelbar ein plan ausgebildeter und im Wesentlichen parallel zur Vorderseite 2 angeordneter Teilbereich 39 der Innenseite 6 an. An den Teilbereich 39 schliesst wiederum unmittelbar ein Teilbereich 57 der Aussenseite 5 des Randes 4 an. Dieser Teilbereich 57 wird durch den Abschnitt 27 des Bauteils 1 gebildet. Wie in Figur 2 ersichtlich, verbindet der Teilbereich 57 den Teilbereich 39 mit dem zweiten Teilbereich 31 der Aussenseite 5.

An den vierten Teilbereich 38 der Innenseite 6 schliesst unmittelbar ein plan ausgebildeter und im Wesentlichen parallel zur Vorderseite 2 angeordneter Teilbereich 40 der Innenseite 6 an. An den Teilbereich 40 schliesst wiederum unmittelbar ein Teilbereich 58 der Aussenseite 5 des Randes 4 an. Dieser Teilbereich 58 wird durch den vierten Abschnitt 29 des Bauteils 1 gebildet. Wie in Figur 2 ersichtlich, verbindet der Teilbereich 58 den Teilbereich 40 mit dem vierten Teilbereich 33 der Aussenseite 5.

An den ersten Teilbereich 35 der Innenseite 6 schliesst unmittelbar ein Teilbereich 59 der Aussenseite 5 des Randes 4 an. Dieser Teilbereich 59 wird durch den ersten Abschnitt 26 des Bauteils 1 gebildet. Wie in Figur 1 ersichtlich, verbindet der Teilbereich 59 den ersten Teilbereich 35 der Innenseite 6 mit dem ersten Teilbereich 30 der Aussenseite 5.

An den dritten Teilbereich 37 der Innenseite 6 schliesst unmittelbar ein Teilbereich 60 der Aussenseite 5 des Randes 4 an. Dieser Teilbereich 60 wird durch den dritten Abschnitt 28 des Bauteils 1 gebildet. Wie in Figur 1 ersichtlich, verbindet der Teilbereich 60 den dritten Teilbereich 37 der Innenseite 6 mit dem dritten Teilbereich 32 der Aussenseite 5.

Die Teilbereiche 57, 58, 59, 60 bilden gemeinsam einen äussersten Bereich 16 der Aussenseite 5 des Randes 4.

Das Bauteil 1 umfasst ein flächiges Dekorelement 7 welches die Vorderseite 2 bildet sowie eine der Vorderseite 2 gegenüberliegende Hinterseite 8 aufweist. Das flächige Dekorelement 7 erstreckt sich in einen Bereich des Randes 4 und bildet einen Teilbereich der Aussenseite 5. Das flächige Dekorelement 7 ist aus einem opaken bzw. aus einem lichtundurchlässigen Material, wie beispielsweise Metall, Kunststoff oder Holz, hergestellt.

An der Hinterseite 8 des flächigen Dekorelementes 7 sind ein einstückig ausgebildeter Lichtleiter 9 sowie ein Beleuchtungsmittel 10 zum Einkoppeln von Licht in den Lichtleiter 9 angeordnet. Der Lichtleiter 9 ist beispielsweise an der Hinterseite 8 des flächigen Dekorelementes 7 mittels eines transluzenten Klebstoffes befestigt oder an der Hinterseite 8 angespritzt. Wie in den Figuren 1, 2 ersichtlich, bildet der Lichtleiter 9 die Rückseite 3 sowie die Innenseite 6 des Bauteils 1. Das Beleuchtungsmittel 10 ist innerhalb des aus einem transluzenten bzw. lichtdurchlässigen Kunststoff hergestellten Lichtleiters 9 eingebettet. Bevorzugt umfasst der Kunststoff des Lichtleiters 9 einen Thermoplasten, einen Duroplast oder ein Elastomer.

Das Beleuchtungsmittel 10 umfasst eine Platine 11 mit Leuchtdioden 12, wobei die Leuchtdioden 12 Licht in den Lichtleiter 9 abstrahlen. Die Kabel des Bauteils 1 zur Versorgung des Beleuchtungsmittels 10 mit elektrischem Strom sind nicht dargestellt. Anstatt der Platine 11 umfassend die Leuchtdioden 12 kann beispielsweise auch eine Elektrolumineszenzfolie oder eine OLED eingesetzt werden. Wie in den Figuren 1, 2 ersichtlich, erstreckt sich der Lichtleiter 9 sowie das flächige Dekorelement 7 bis in einen Bereich des Randes 4.

Wie in den Figuren 1, 2 ausserdem ersichtlich ist, bildet das flächige Dekorelement 7 einen Teilbereich der Aussenseite 5 und der Lichtleiter 9 bildet einen Teilbereich der Aussenseite 5. Die Aussenseite 5 des Bauteils 1 wird somit gemeinsam vom flächigen Dekorelement 7 und dem Lichtleiter 9 gebildet. Anhand der Figuren 1, 2, 3 ist ebenfalls ersichtlich, dass das flächige Dekorelement 7 und der Lichtleiter 9 gemeinsam den Rand 4 bilden. Das Basiselement 63 umfasst einen Teilbereich des flächigen Dekorelementes 7, einen Teilbereich des Lichtleiters 9 sowie das Beleuchtungsmittel 10.

Wie schon erwähnt und in den Figuren 1, 3 erkennbar, umschliesst der Rand 4, in der Draufsicht auf die Vorderseite 2 gesehen, die Vorderseite 2 teilweise. Somit umschliesst der äusserste Bereich 16 der Aussenseite 5, in der Draufsicht auf die Vorderseite 2 gesehen, ebenfalls teilweise die Vorderseite 2. Des Weiteren ist in den Figuren 1, 3 erkennbar, insbesondere ist in der Figur 3 erkennbar, dass der Rand 4 das Basiselement 63 teilweise umschliesst.

Im zweiten Teilbereich 36 des Abschnittes 27 des Randes 4 sowie im vierten Teilbereich 38 des Abschnittes 29 des Randes 4 weist der Lichtleiter 9 Lichtumlenkstrukturen 17 auf zum gezielten Abstrahlen von Licht von der Aussenseite 5 des Randes 4. Die Lichtumlenkstrukturen 17 sind beispielsweise auf einem Grundkörper 18 des Lichtleiters 9 aufgedruckt. Alternativ oder zusätzlich können die Lichtumlenkstrukturen 17 beispielsweise auch innerhalb des Lichtleiters 9 angeordnet sein, oder der Lichtleiter 9 weist Erhebungen und / oder Vertiefungen auf, welche als Lichtumlenkstrukturen ausgebildet sind. Im Falle, dass die Lichtumlenkstrukturen aufgedruckt oder als Erhebungen und / oder Vertiefungen ausgebildet sind, bilden die Lichtumlenkstrukturen einen Teilbereich der Innenseite 6 des Randes 4.

Das flächige Dekorelement 7 umfasst, wie in den Figuren 1, 2 und 3 ersichtlich, einen Durchbruch 13, welcher, wie in den Figuren 1, 3 erkennbar, in der Draufsicht auf das Bauteil 1 gesehen, eine quadratische Kontur 34 aufweist. Innerhalb des Durchbruchs 13 ist ein inselförmiger Teil 14 angeordnet, welcher bevorzugt durch das flächige Dekorelement 7 gebildet ist und welcher vom Lichtleiter 9 getragen ist. Das flächige Dekorelement 7 besteht somit aus einem Hauptkörper 19 sowie einem inselförmigen Teil 14. Das flächige Dekorelement 7 ist somit zweistückig ausgebildet. Zwischen dem Hauptkörper 19 des flächigen Dekorelementes 7 und dem inselförmigen Teil 14 des flächigen Dekorelementes 7 ist der Durchbruch 13 ausgebildet, welcher in der Draufsicht auf die Vorderseite 2 den inselförmigen Teil 14 vollständig umschliesst. In den Durchbruch 13 greift ein Teilbereich 15 des Lichtleiters 9 ein und umschliesst, in der Draufsicht auf die Vorderseite 2 gesehen, den inselförmigen Teil 14 vollständig. Unterhalb des Durchbruchs 13 ist das Beleuchtungsmittel 10 angeordnet. Die Vorderseite 2 des Bauteils 1 wird somit vom flächigen Dekorelement 7 sowie vom Lichtleiter 9 bzw. vom Teilbereich 15 des Lichtleiters 9 gebildet. Der Durchbruch 13 ist zudem vollständig vom Lichtleiter 9 ausgefüllt.

Des Weiteren ist ein Teilbereich 21 der Vorderseite 2, welcher durch den inselförmigen Teil 14 gebildet ist, bündig mit einem Teilbereich 22 der Vorderseite 2, welcher durch den Teilbereich 15 des Lichtleiters 9 gebildet ist, und der Teilbereich 22 ist wiederum bündig mit dem durch den Hauptkörper 19 des flächigen Dekorelementes 7 gebildeten Teilbereich 23 der Vorderseite 2, welcher unmittelbar an den Teilbereich 22 angrenzt. Die Bündigkeit der Teilbereiche 21, 22 und 23 zueinander bewirkt den Vorteil, dass die Gefahr verringert ist, dass Verschmutzungen in das Bauteil 1 eintreten können.

Wird nun von den Leuchtdioden 12 Licht ausgestrahlt, so pflanzt sich das Licht innerhalb des Lichtleiters 9, insbesondere durch Totalreflexion, in Richtung des Teilbereiches 15 des Lichtleiters 9 sowie in Richtung des Randes 4 fort. Das in die Richtung des Randes 4 geleitete Licht verlässt die Aussenseite 5 über den durch den Lichtleiter 9 gebildeten Teilbereich der Aussenseite 5. Im Bereich des Randes 4, welcher die Lichtumlenkstrukturen 17 aufweist, wird das Licht durch die Lichtumlenkstrukturen 17 umgelenkt und über die Teilbereiche 57, 58 des äussersten Bereich 16 der Aussenseite 5 gezielt von der Aussenseite 5 abgestrahlt. Durch die beschriebene Abstrahlung von Licht von der Aussenseite 5 wird die Vorderseite 2 vollständig von Licht umstrahlt und hierdurch die gesamte Vorderseite 2 des Bauteils 1 in der Wahrnehmung des Betrachters im Vergleich zu anderen Bauteilen, insbesondere im Vergleich zu einem Bauteil 24, beispielsweise eines Kraftfahrzeuges, auf dessen Oberfläche, welche beispielsweise in einem Innenbereich oder einem Aussenbereich des Kraftfahrzeuges angeordnet ist, das Bauteil 1 aufliegt, hervorgehoben.

Das sich in Richtung des Teilbereiches 15 des Lichtleiters 9 fortpflanzende Licht gelangt in den Teilbereich 15 des Lichtleiters 9 und wird über den Teilbereich 22 der Vorderseite 2 des Bauteils 1 von der Vorderseite 2 abgestrahlt. In der Draufsicht auf die Vorderseite 2 gesehen umstrahlt das Licht vollständig den inselförmigen Teil 14. Aufgrund des den inselförmigen Teil 14 umrahmenden Lichtes wird eine derartige optische Wirkung erzielt, dass der inselförmige Teil 14 im Vergleich zum Hauptkörper 19 des Dekorelements 7 als abgehoben oder sogar darüber schwebend erscheint. Wie in den Figuren 1, 2, 3 erkennbar, wird die gesamte Sichtseite 41 des Bauteils 1 im Einbauzustand des Bauteils 1 durch die Vorderseite 2 sowie die Aussenseite 5 gebildet.

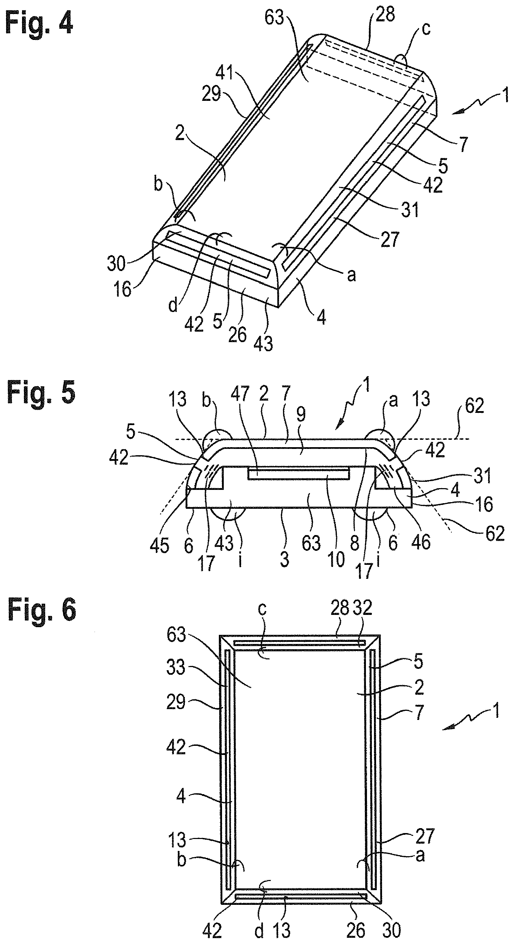

Die Figur 4 zeigt schematisch eine räumliche Ansicht einer zweiten Ausführungsform eines erfindungsgemässen Bauteils. Die Figur 5 zeigt schematisch einen Querschnitt durch das Bauteil gemäss Figur 4. Die Figur 6 zeigt schematisch eine Draufsicht auf eine Vorderseite des Bauteils gemäss Figur 4.

Das erfindungsgemässe beleuchtbare Bauteil 1 gemäss den Figuren 4, 5, 6 weist eine plane Vorderseite 2 und eine im Wesentlichen plane Rückseite 3 auf. Die Vorderseite 2 und die Rückseite 3 sind im Wesentlichen parallel zueinander angeordnet.

Das Bauteil 1 umfasst ein Basiselement 63, welches insgesamt eine im Wesentlichen quaderförmige Gestalt aufweist. Das Basiselement 63 bildet die Vorderseite 2 und die Rückseite 3. Ein Rand 4 ist am Basiselement 63 befestigt. Der Rand 4 umfasst eine Aussenseite 5 und eine Innenseite 6. Die Aussenseite 5 schliesst unmittelbar an die Vorderseite 2 an und die Innenseite 6 schliesst unmittelbar an die Aussenseite 5 und die Rückseite 3 an. Somit verbindet die Innenseite 6 die Aussenseite 5 mit der Rückseite 3. Wie in Figur 6 erkennbar, bilden die Vorderseite 2 und die Aussenseite 5 gemeinsam die gesamte Sichtseite 41 des Bauteils 1.

Der Rand 4 des Bauteils 1 gemäss den Figuren 4, 5, 6 umfasst vier Abschnitte, nämlich einen ersten Abschnitt 26, einen zweiten Abschnitt 27, einen dritten Abschnitt 28 sowie einen vierten Abschnitt 29. Die Abschnitte 26, 27, 28, 29 sind einstückig miteinander verbunden und somit umschliesst der Rand 4, wie in den Figuren 4, 6 ersichtlich, und wie insbesondere in der Draufsicht auf die Vorderseite 2 des Bauteils 1 gemäss Figur 6 erkennbar, die Vorderseite 2 vollständig. Somit ist die Innenseite 6 ebenfalls umlaufend um die Rückseite 3 ausgebildet. Ebenfalls ist das Basiselement 63, wie in den Figuren 4, 5, 6 erkennbar, insbesondere wie in der Figur 6 erkennbar, vom Rand 4 vollständig umschlossen.

Der erste Abschnitt 26 des Randes 4 bildet einen ersten, nach aussen gewölbt ausgebildeten Teilbereich 30 der Aussenseite 5, welcher unmittelbar an die Vorderseite 2 anschliesst. Der zweite Abschnitt 27 des Randes 4 bildet einen zweiten, nach aussen gewölbt ausgebildeten Teilbereich 31 der Aussenseite 5, welcher unmittelbar an die Vorderseite 2 anschliesst, der dritte Abschnitt 28 des Randes 4 bildet einen dritten, nach aussen gewölbt ausgebildeten Teilbereich 32 der Aussenseite 5, welcher unmittelbar an die Vorderseite 2 anschliesst, und der vierte Abschnitt 29 des Randes 4 bildet einen vierten, nach aussen gewölbt ausgebildeten Teilbereich 33 der Aussenseite 5, welcher unmittelbar an die Vorderseite 2 anschliesst. Die an den zweiten Teilbereich 31 der Aussenseite 5 angelegte Tangente 62 bildet mit der an die Vorderseite 2 angelegten Tangente 62 einen Winkel a von ca. 235°. Entsprechend wie im Zusammenhang mit dem Winkel a beschrieben, bildet der dritte Teilbereich 32 der Aussenseite 5 mit der Vorderseite 2 einen Winkel c von ca. 235°, der vierte Teilbereich 33 bildet mit der Aussenseite 5 einen Winkel b von ca. 235°, und der erste Teilbereich 30 der Aussenseite 5 bildet mit der Vorderseite 2 einen Winkel d von ca. 235°. Die Winkel a, b, c, d sind somit alle etwa gleich gross. Wie anhand von Figur 5 ersichtlich ist, bildet die Rückseite 3 mit der Innenseite 6 des Randes 4 durchgehend einen Winkel i von ca. 180°.

Das Bauteil 1 umfasst ein einstückig ausgebildetes flächiges Dekorelement 7, welches die Vorderseite 2 bildet sowie eine der Vorderseite 2 gegenüberliegende Hinterseite 8 aufweist. Das flächige Dekorelement 7 erstreckt sich in den Bereich des Randes 4 und bildet einen Teilbereich der Aussenseite 5. Das flächiges Dekorelement 7 ist aus einem opaken bzw. aus einem lichtundurchlässigen Material, wie beispielsweise Metall, Kunststoff oder Holz hergestellt. An der Hinterseite 8 des flächigen Dekorelementes 7 ist ein einstückig ausgebildeter Lichtleiter 9 angeordnet. Der Lichtleiter 9 ist beispielsweise an wenigstens einem Teilbereich der Hinterseite 8 des flächigen Dekorelementes 7 mittels eines transluzenten Klebstoffes befestigt oder an wenigstens einem Teilbereich der Rückseite 8 angespritzt. Der Lichtleiter 9 ist aus einem transluzenten bzw. lichtdurchlässigen Kunststoff hergestellt, wobei der Kunststoff bevorzugt ein Thermoplast, ein Duroplast oder ein Elastomer, bevorzugt ein Thermoplast, ist. Wie in den Figuren 4, 5, 6 ersichtlich, greift der Lichtleiter 9 im Bereich des Randes 4 in vier Durchbrüche 13 des flächigen Dekorelementes 7 ein. Somit bildet der Lichtleiter 9 vier Teilbereiche 42 der Aussenseite 5 des Bauteils 1 und somit vier Teilbereiche der Sichtseite 41 des Bauteils 1. Wie in den Figuren 4, 5, 6 erkennbar, umschliessen die vier Durchbrüche 13, und somit der in die Durchbrüche 13 eingreifende Lichtleiter 9, in der Draufsicht auf die Vorderseite 2 gesehen, teilweise die Vorderseite 2.

An einer umlaufenden Stirnseite 45 des flächigen Dekorelementes 7 sowie an einer umlaufenden Stirnseite 46 des Lichtleiters 9 ist ein Gehäuse 43 befestigt. Das Gehäuse 43 bildet, wie in den Figuren 4, 5, 6 ersichtlich, die Rückseite 3, die Innenseite 6 sowie einen Teilbereich der umlaufenden Aussenseite 5, insbesondere einen äussersten Bereich 16 der umlaufenden Aussenseite 5. Somit sind der Rand 4 als auch die Aussenseite 5 des Randes 4 gemeinsam durch das flächige Dekorelement 7, den Lichtleiter 9 sowie das Gehäuse 43 gebildet.

Unterhalb des Lichtleiters 9 ist ein Beleuchtungsmittel 10 innerhalb einer Vertiefung 47 des Gehäuses 43 angeordnet. Das Beleuchtungsmittel 10 ist zum Beispiel als Elektrolumineszenzfolie ausgebildet und dient zum Einkoppeln von Licht in den Lichtleiter 9. Selbstverständlich können auch andere Beleuchtungsmittel verwendet werden. Die Kabel zu Stromversorgung der Elektrolumineszenzfolie sind nicht dargestellt.

Der Lichtleiter 9 weist im Bereich der vier Durchbrüche 13 Lichtumlenkstrukturen 17 auf zum gezielten Abstrahlen von Licht von der Aussenseite 5 des Randes 4. In Figur 5 sind im Bereich von zwei Durchbrüchen 13 Lichtumlenkstrukturen 17 erkennbar. Die Lichtumlenkstrukturen 17 sind innerhalb des Lichtleiters 9 angeordnet und beispielsweise mittels eines Lasers hergestellt.

Wird nun vom Beleuchtungsmittel 10 Licht ausgestrahlt, so pflanzt sich das Licht innerhalb des Lichtleiters 9, insbesondere durch Totalreflexion in Richtung des Randes 4, fort. Im Bereich des Randes 4 wird das Licht durch die Lichtumlenkstrukturen 17 umgelenkt und über die vier Teilbereiche 42 der Aussenseite 5 gezielt von der Aussenseite 5 abgestrahlt. Hierdurch ist die Vorderseite 2, in der Draufsicht auf die Vorderseite 2 gesehen, teilweise von Licht umstrahlt und hierdurch ist die Vorderseite 2 des Bauteils 1, in der Wahrnehmung des Betrachters im Vergleich zu anderen Bauteilen, insbesondere im Vergleich zu einem Bauteil, beispielsweise eines Kraftfahrzeuges, auf dessen Oberfläche, welche beispielsweise in einem Innenbereich oder einem Aussenbereich des Kraftfahrzeuges angeordnet ist, das Bauteil 1 aufliegt, hervorgehoben.

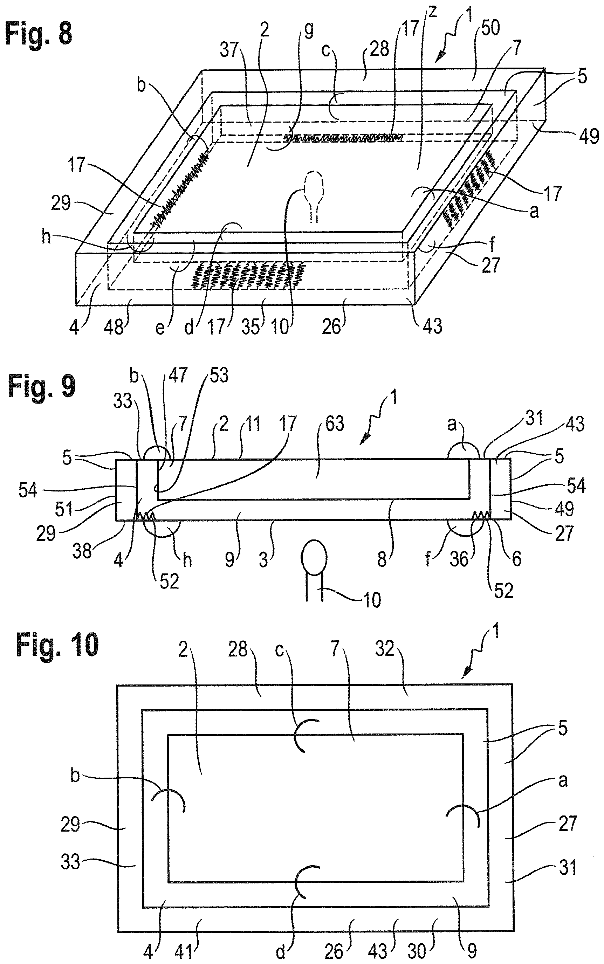

Die Figur 8 zeigt schematisch eine räumliche Ansicht einer dritten Ausführungsform eines erfindungsgemässen Bauteils. Die Figur 9 zeigt schematisch einen Querschnitt durch das Bauteil gemäss Figur 8. Die Figur 10 zeigt schematisch eine Draufsicht auf die Vorderseite des Bauteils gemäss der Figur 8.

Das erfindungsgemässe beleuchtbare Bauteil 1 gemäss den Figuren 8, 9, 10 weist eine im Wesentlichen plane Vorderseite 2 und eine im Wesentlichen plane Rückseite 3 auf. Die Vorderseite 2 und die Rückseite 3 sind im Wesentlichen parallel zueinander angeordnet.

Das Bauteil 1 umfasst ein Basiselement 63, welches insgesamt eine im Wesentlichen quaderförmige Gestalt aufweist. Das Basiselement 63 bildet die Vorderseite 2 und die Rückseite 3. Ein Rand 4 ist am Basiselement 63 befestigt. Der Rand 4 umfasst eine Aussenseite 5 und eine Innenseite 6, wobei die Aussenseite 5 unmittelbar an die Vorderseite 2 anschliesst und die Innenseite 6 unmittelbar an die Rückseite 3 anschliesst. Die Vorderseite 2 und die Aussenseite 5 bilden gemeinsam die gesamte Sichtseite 41 des Bauteils 1. Wie in den Figuren 8, 9 ersichtlich, verbindet die Innenseite 6 des Randes 4 die Aussenseite 5 des Randes 4 mit der Rückseite 3.

Der Rand 4 des Bauteils 1 gemäss den Figuren 8, 9, 10 umfasst vier Abschnitte, nämlich einen ersten Abschnitt 26, einen zweiten Abschnitt 27, einen dritten Abschnitt 28 sowie einen vierten Abschnitt 29. Selbstverständlich kann der Rand 4 auch weniger oder mehr als vier Abschnitte aufweisen. Wie in den Figuren 8, 10 erkennbar, insbesondere wie in der Draufsicht auf die Vorderseite 2 des Bauteils 1 gemäss der Figur 10 gesehen, umschliesst der Rand 4 die Vorderseite 2 vollständig, da der Abschnitt 26 mit den Abschnitten 27, 29 und der Abschnitt 28 mit den Abschnitten 27, 29 verbunden ist. Somit ist das Basiselement 63 ebenfalls, in der Draufsicht auf die Vorderseite 2 gesehen, vom Rand 4 vollständig umschlossen.

Der erste Abschnitt 26 des Randes 4 bildet einen ersten, plan ausgebildeten Teilbereich 30 der Aussenseite 5 welcher unmittelbar an die Vorderseite 2 anschliesst. Der zweite Abschnitt 27 des Randes 4 bildet einen zweiten, plan ausgebildeten Teilbereich 31 der Aussenseite 5, welcher unmittelbar an die Vorderseite 2 anschliesst, der dritte Abschnitt 28 des Randes 4 bildet einen dritten, plan ausgebildeten Teilbereich 32 der Aussenseite 5, welcher unmittelbar an die Vorderseite 2 anschliesst und der vierte Abschnitt 29 des Randes 4 bildet einen vierten, plan ausgebildeten Teilbereich 33 der Aussenseite 5, welcher unmittelbar an die Vorderseite 2 anschliesst.

Wie in Figuren 8, 9, 10 ersichtlich, bildet der erste Teilbereich 30 der Aussenseite 5 mit der Vorderseite 2 einen Winkel d von ca. 180°. Der zweite Teilbereich 31 der Aussenseite 5 bildet mit der Vorderseite 2 einen Winkel a von ca. 180°, der dritte Teilbereich 32 der Aussenseite 5 bildet mit der Vorderseite 2 einen Winkel c von 180°, und der vierte Teilbereich 33 bildet mit der Aussenseite 5 einen Winkel b von ca. 180°.

Der erste Abschnitt 26 des Randes 4 bildet einen ersten, plan ausgebildeten Teilbereich 35 der Innenseite 6, welcher unmittelbar an die Rückseite 3 anschliesst. Der zweite Abschnitt 27 des Randes 4 bildet einen zweiten, plan ausgebildeten Teilbereich 36 der Innenseite 6, welcher unmittelbar an die Rückseite 3 anschliesst, der dritte Abschnitt 28 des Randes 4 bildet einen dritten, plan ausgebildeten Teilbereich 37 der Innenseite 6, welcher unmittelbar an die Rückseite 3 anschliesst, und der vierte Abschnitt 29 des Randes 4 bildet einen vierten, plan ausgebildeten Teilbereich 38 der Innenseite 6, welcher unmittelbar an die Rückseite 3 anschliesst.

Wie in Figuren 8 und 9 ersichtlich, bildet der erste Teilbereich 35 der Innenseite 6 mit der Rückseite 3 einen Winkel e von ca. 180°. Der zweite Teilbereich 36 der Innenseite 6 bildet mit der Rückseite 3 einen Winkel f von ca. 180°, der dritte Teilbereich 37 der Innenseite 6 bildet mit der Rückseite 3 einen Winkel g von 180°, und der vierte Teilbereich 38 bildet mit der Innenseite 6 einen Winkel h von ca. 180°.

Wie in den Figuren 8, 9 erkennbar, verbindet ein Teilbereich 48 der Aussenseite 5 den ersten Teilbereich 30 der Aussenseite 5 mit dem ersten Teilbereich 35 der Innenseite 6. Ein Teilbereich 49 der Aussenseite 5 verbindet den zweiten Teilbereich 31 der Aussenseite 5 mit dem zweiten Teilbereich 36 der Innenseite 6. Ein Teilbereich 50 der Aussenseite 5 verbindet den dritten Teilbereich 32 der Aussenseite 5 mit dem dritten Teilbereich 37 der Innenseite 6. Der Teilbereich 51 der Aussenseite 5 verbindet den vierten Teilbereich 33 der Aussenseite 5 mit dem vierten Teilbereich 38 der Innenseite 6.

Das Bauteil 1 umfasst ein flächiges Dekorelement 7, welches die Vorderseite 2 bildet sowie eine der Vorderseite 2 gegenüberliegende Hinterseite 8 aufweist. Bei dieser dritten Ausführungsform des erfindungsgenässen Bauteils 1 gemäss den Figuren 8, 9, 10 erstreckt sich das flächige Dekorelement 7, im Gegensatz zur ersten Ausführungsform des erfindungsgemässen Bauteils 1 gemäss den Figuren 1, 2, 3 sowie der zweiten Ausführungsform des erfindungsgemässen Bauteils 1 gemäss den Figuren 4, 5, 6, nicht in den Bereich des Randes 4 und bildet somit keinen Teilbereich des Randes 4 sowie keinen Teilbereich der Aussenseite 5. Das flächige Dekorelement 7 ist aus einem opaken bzw. aus einem lichtundurchlässigen Material, wie beispielsweise Metall, Kunststoff oder Holz, hergestellt.

An der Hinterseite 8 des flächigen Dekorelementes 7 sind ein Lichtleiter 9 sowie ein Beleuchtungsmittel 10 zum Einkoppeln von Licht in den Lichtleiter 9 angeordnet. Der Lichtleiter 9 erstreckt sich entlang einer umlaufenden Seitenfläche 53 des flächigen Dekorelementes 7 sowie entlang der Hinterseite 8 des flächigen Dekorelementes 7 und ist somit als Wanne ausgebildet. In einer Vertiefung 47 der Wanne ist das flächige Dekorelement 7 angeordnet. Der Lichtleiter 9 ist bevorzugt aus Kunststoff oder Glas, bevorzugter aus Kunststoff, hergestellt. Im Falle, dass der Lichtleiter 9 aus Kunststoff hergestellt ist, ist der Kunststoff bevorzugt ein Thermoplast, ein Duroplast oder ein Elastomer, bevorzugter ein Thermoplast. Beispielsweise ist der Lichtleiter 9 am flächigen Dekorelement 7 mittels eines transluzenten Klebstoffes befestigt oder am flächigen Dekorelement 7 angespritzt. Der Lichtleiter 9 kann beispielsweise in der Vertiefung 47 des flächigen Dekorelementes 7 auch nur eingelegt sein.

Wie in den Figuren 8, 9 ersichtlich, bildet der Lichtleiter 9 die Rückseite 3 des Bauteils 1, einen unmittelbar an die Rückseite 3 anschliessenden Teilbereich 52 der Innenseite 6 des Bauteils 1 sowie einen Teil der Sichtseite 41 des Bauteils 1. Das Beleuchtungsmittel 10 umfasst eine Glühbirne, wobei das Beleuchtungsmittel 10 Licht in den Lichtleiter 9 abstrahlt. Die Kabel zu Stromversorgung des Beleuchtungsmittels 10 sind nicht dargestellt. Anstatt des als Glühbirne ausgebildeten Beleuchtungsmittels 10 kann beispielsweise auch eine Elektrolumineszenzfolie, eine OLED oder eine Leuchtdiode oder mehrere Leuchtdioden verwendet werden.

In Bereichen des Teilbereiches 52 der Innenseite 6 weist der Lichtleiter 9 Lichtumlenkstrukturen 17 auf zum gezielten Abstrahlen von Licht von der Aussenseite 5 des Randes 4. Die Lichtumlenkstrukturen 17 sind als Erhebungen und Vertiefungen ausgebildet und bilden somit eine äussere Oberfläche des Lichtleiters 9.

Um eine umlaufende Seitenfläche 54 des Lichtleiters 9 erstreckt sich ein Gehäuse 43. Das Gehäuse 43 ist aus einem opaken bzw. lichtundurchlässigen Material, wie beispielsweise einem Kunststoff gebildet. Der Rand 4 wird somit, wie in den Figuren 8, 9 erkennbar, gemeinsam vom Lichtleiter 9 sowie vom Gehäuse 43 gebildet. Wie in den Figuren 8, 9 zudem ersichtlich ist, bildet der Lichtleiter 9 einen Teilbereich der Aussenseite 5 des Randes 4 sowie einen Teilbereich der Innenseite 6 des Randes 4. Der durch das Gehäuse 43 gebildete Teilbereich der Innenseite 6 bildet somit gemeinsam mit dem Teilbereich 52 des Innenseite 6 des Lichtleiters 9 die gesamte Innenseite 6 des Randes 6. Das Gehäuse 43 bildet zudem die Teilbereiche 48, 49, 50, 51 der Aussenseite 5.

Wird nun von der Glühbirne Licht ausgestrahlt, so wird das ausgestrahlte Licht in den Lichtleiter 9 eingekoppelt. Innerhalb des Lichtleiters 9 pflanzt sich das Licht, insbesondere durch Totalreflexion, fort in Richtung des Randes 4. Im Bereich des Randes 4 wird das Licht durch die Lichtumlenkstrukturen 17 um einen Winkel von ca. 90° umgelenkt und über den durch den Lichtleiter 9 gebildeten Teil der Aussenseite 5 gezielt von der Aussenseite 5 abgestrahlt. Hierdurch ist die Vorderseite 2 vollständig von Licht umstrahlt und hierdurch ist die gesamte Vorderseite 2 des Bauteils 1 in der Wahrnehmung des Betrachters, im Vergleich zu einem anderen Bauteil, auf dessen Oberfläche das Bauteil 1 aufliegt, hervorgehoben. Das genannte andere Bauteil, und somit dessen Oberfläche, ist beispielsweise in einem Innenbereich oder einem Aussenbereich eines Kraftfahrzeuges angeordnet.

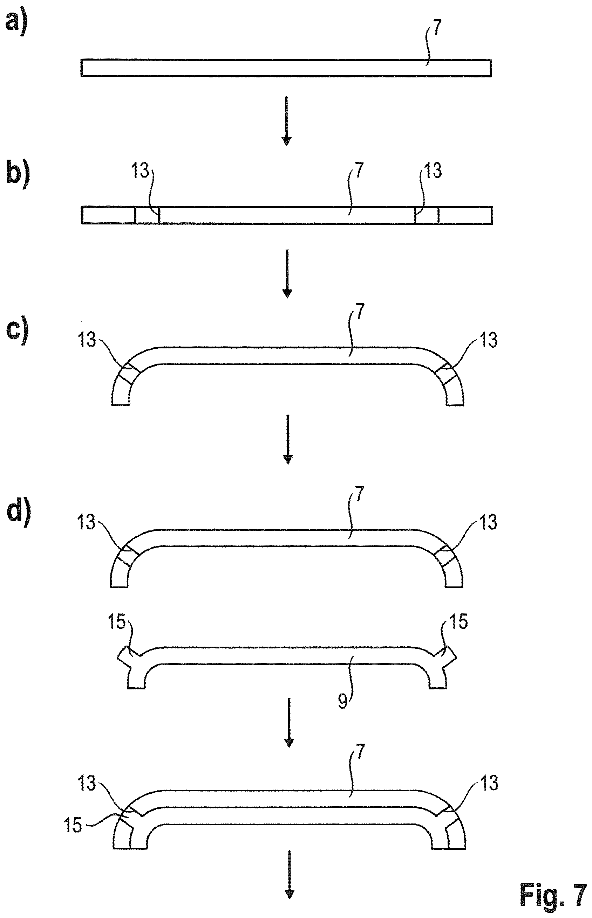

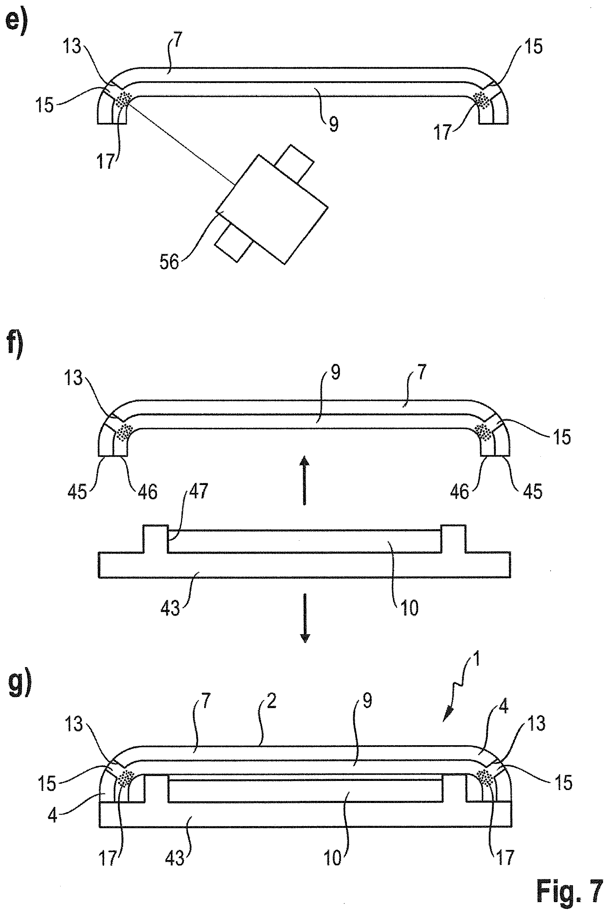

Im Folgenden werden anhand der schematischen Figur 7 Verfahrensschritte zur Herstellung der zweiten Ausführungsform des erfindungsgemässen Bauteils 1 gemäss den Figuren 4, 5 ,6 beschrieben. Das Verfahren gemäss der Figur 7 umfasst die Schritte a) - f).

In einem Schritt a) wird das flächige Dekorelement 7 bereitgestellt. In nächsten Schritt b) werden die Durchbrüche 13 im flächigen Dekorelement 7 generiert, beispielsweise mittels Stanzen, Laser oder Bohren (nicht dargestellt). Das flächige Dekorelement 7 umfassend die Durchbrüche 13 wird in einem Schritt c) umgeformt, indem ein Rand des flächigen Dekorelementes 7 umgebogen wird. In einem Schritt d) wird der vorgefertigte Lichtleiter 9 an das flächige Dekorelement 7 angebracht, indem Teilbereiche 15 des Lichtleiters 9 in die Durchbrüche 13 eingesteckt werden. Im Schritt e) werden die Lichtumlenkstrukturen 17 mittels eines Lasers 56 innerhalb des Lichtleiters 9 hergestellt, bevorzugt unterhalb der Teilbereiche 15 des Lichtleiters 9 hergestellt. Danach wird in einem Schritt f) das Gehäuse 43 mit dem bereits in die Vertiefung 47 des Gehäuses 43 eingelegten Beleuchtungsmittels 10 an das aus dem Schritt e) resultierenden Produkt angebracht. Hierzu wird an der umlaufenden Stirnseite 45 des flächigen Dekorelementes 7 sowie an der umlaufenden Stirnseite 46 des Lichtleiters 9 das Gehäuse 43, beispielsweise mittels eines Klebstoffes, befestigt und es resultiert die zweite Ausführungsform des erfindungsgemässen Bauteils 1 gemäss den Figuren 4, 5, 6.

Die vorstehende Erfindung ist selbstverständlich nicht auf die beschriebenen Ausführungsformen beschränkt, und eine Vielzahl von Abwandlungen ist möglich. Beispielsweise kann das erfindungsgemässe Bauteil 1 gemäss den Figuren 1 bis 10 eine Schutzschicht aufweisen, welche wenigstens einen Teilbereich der Sichtseite 41 des Bauteils 1 bedeckt und welche von der Sichtseite 41 bevorzugt ablösbar ist. Diese Schutzschicht ist bevorzugt aus einem transluzenten Material hergestellt. Die Gestalt des Basiselementes 63 sowie die Gestalt des Randes 4 können grundsätzlich beliebig sein. Eine Vielzahl von Abwandlungen ist möglich.

**BEZUGSZEICHENLISTE**

| | | | |
|---|---|---|---|
| 1 | Bauteil | 16 | äusserster Bereich der Aussenseite 5 |
| 2 | Vorderseite | 17 | Lichtumlenkstrukturen |
| 3 | Rückseite | 18 | Grundkörper des Lichtleiters |
| 4 | Rand | 19 | Hauptkörper |
| 5 | Aussenseite | 21 | Teilbereich |
| 6 | Innenseite | 22 | Teilbereich |
| 7 | flächiges Dekorelement | 23 | Teilbereich |
| 8 | Hinterseite | 24 | Bauteil |
| 9 | Lichtleiter | 26 | erster Abschnitt des Randes 4 |
| 10 | Beleuchtungsmittel | 27 | zweiter Abschnitt des Randes 4 |
| 11 | Platine | 28 | dritter Abschnitt des Randes 4 |
| 12 | Leuchtdioden | 29 | vierter Abschnitt des Randes 4 |
| 13 | Durchbruch | 30 | erster Teilbereich der Aussenseite 5 |
| 14 | inselförmiger Teil | | |
| 15 | Teilbereich des Lichtleiters 9 | 31 | zweiter Teilbereich der Aussenseite 5 |
| 32 | dritter Teilbereich der Aussenseite 5 | 53 | Seitenfläche des flächigen |
| 33 | vierter Teilbereich der Aussenseite 5 | | Dekorelementes 7 |
| 34 | Kontur | 54 | Seitenfläche des Lichtleiters 9 |
| 35 | erster Teilbereich der Innenseite 6 | 56 | Laser |
| 36 | zweiter Teilbereich der Innenseite 6 | 57 | Teilbereich des äussersten |
| 37 | dritter Teilbereich der Innenseite 6 | | Bereiches 16 |
| 38 | vierter Teilbereich der Innenseite 6 | 58 | Teilbereich des äussersten |
| 39 | Teilbereich der Innenseite 6 | | Bereiches 16 |
| 40 | Teilbereich der Innenseite 6 | 59 | Teilbereich des äussersten Bereiches 16 |
| 41 | Sichtseite | 60 | Teilbereich des äussersten Bereiches 16 |
| 42 | Teilbereich des Aussenseite 5 | 62 | Tangente |
| 43 | Gehäuse | 63 | Basiselement |
| 44 | Ecke | 64 | Seitenfläche |
| 45 | Stirnseite des flächigen | a - i | Winkel |
| | Dekorelementes 7 | | |
| 46 | Stirnseite des Lichtleiters 9 | | |
| 47 | Vertiefung | | |
| 48 | Teilbereich | | |
| 49 | Teilbereich | | |
| 50 | Teilbereich | | |
| 51 | Teilbereich | | |
| 52 | Teilbereich der Innenseite 6 | | |

## Patentansprüche

1. Beleuchtbares Bauteil (1) umfassend ein Basiselement (63), welches eine Vorderseite (2) und eine Rückseite (3) des Bauteils (1) bildet, sowie einen am Basiselement (63) befestigten und dieses umschliessenden Rand (4) mit einer Aussenseite (5) und einer Innenseite (6), wobei die Aussenseite (5) unmittelbar an die Vorderseite (2) anschliesst und die Innenseite (6) unmittelbar an die Rückseite (3) anschliesst, das Bauteil (1) aufweisend
- ein flächiges Dekorelement (7), welches wenigstens einen Teilbereich (21, 23) der Vorderseite (2) bildet sowie eine dem wenigstens einen Teilbereich (21, 23) der Vorderseite (2) gegenüberliegende Hinterseite (8) aufweist,
- einen an der Hinterseite (8) des flächigen Dekorelementes (7) angeordneten Lichtleiter (9) sowie
- ein Beleuchtungsmittel (10) zum Einkoppeln von Licht in den Lichtleiter (9), wobei der Lichtleiter (9) sich wenigstens bis in einen Bereich des Randes (4) erstreckt, wobei das Basiselement (63) einen Teilbereich des flächigen Dekorelementes (7), einen Teilbereich des Lichtleiters (9) sowie das Beleuchtungsmittel (10) umfasst,
wobei der Lichtleiter (9) im Bereich des Randes (4) Lichtumlenkstrukturen (17) aufweist zum gezielten Abstrahlen von Licht von der Aussenseite (5) des Randes (4), und dass die Lichtumlenkstrukturen (17) einen Oberflächenbereich des Lichtleiters (9) bilden und als Erhebungen und/oder Vertiefungen ausgebildet sind oder innerhalb des Lichtleiters (9) angeordnet und mittels Laser hergestellt sind.

2. Bauteil (1) nach Anspruch 1, **dadurch gekennzeichnet, dass** das flächige Dekorelement (7) wenigstens einen Teilbereich (31) der Aussenseite (5) des Randes (4) bildet.

3. Bauteil (1) nach Anspruch 1 oder 2, **dadurch gekennzeichnet, dass** das flächige Dekorelement (7), bevorzugt in einem Bereich der Vorderseite (2) und / oder der Aussenseite (5), wenigstens einen Durchbruch (13) aufweist, wobei bevorzugt der Lichtleiter (9) in wenigstens einen Durchbruch (13) eingreift.

4. Bauteil (1) nach Anspruch 3, **dadurch gekennzeichnet, dass** wenigstens ein Durchbruch (13) die Vorderseite (2), bevorzugt in der Draufsicht auf die Vorderseite (2) gesehen, wenigstens teilweise, bevorzugt vollständig, umschliesst.

5. Bauteil (1) nach Anspruch 3 oder 4, **dadurch gekennzeichnet, dass** innerhalb wenigstens eines Durchbruches (13), welcher bevorzugt in einem Bereich der Vorderseite (2) und / oder der Aussenseite (5) angeordnet ist, wenigstens ein inselförmiger Teil (14), welcher bevorzugt durch das flächige Dekorelement (7) gebildet ist, angeordnet ist, wobei der Lichtleiter (9) bevorzugt in den Durchbruch (13) eingreift, so dass der inselförmige Teil (14), bevorzugt in der Draufsicht auf die Vorderseite (2) und / oder Aussenseite (5) gesehen, wenigstens teilweise, bevorzugt vollständig, durch den in den Durchbruch (13) eingreifenden Lichtleiter (9) umschlossen ist und wobei bevorzugt der inselförmige Teil (14) vom Lichtleiter (9) getragen ist.

6. Bauteil (1) nach einem der vorangehenden Ansprüche, **dadurch gekennzeichnet, dass** der Rand (4) das Basiselement (63), bevorzugt in der Draufsicht auf die Vorderseite (2) gesehen, wenigstens teilweise, bevorzugt vollständig, umschliesst, wobei der Lichtleiter (9) bevorzugt wenigstens einen äussersten Bereich (16) der Aussenseite (5) des Randes (4) bildet.

7. Bauteil (1) nach einem der vorangehenden Ansprüche, **dadurch gekennzeichnet, dass** der Lichtleiter (9) sich im Wesentlichen über die gesamte Hinterseite (8) des flächigen Dekorelementes (7) erstreckt.

8. Bauteil (1) nach einem der vorangehenden Ansprüche, **dadurch gekennzeichnet, dass** wenigstens ein Teilbereich der Aussenseite (5) des Randes (4) mit der Vorderseite (2), bevorzugt mit der durch das flächige Dekorelement (7) gebildeten Vorderseite (2), einen Winkel (a-d) von 90° - 270°, bevorzugt von 180 - 270°, einschliesst.

9. Bauteil (1) nach einem der vorangehenden Ansprüche, **dadurch gekennzeichnet, dass** der Lichtleiter (9) an der Hinterseite (8) des flächigen Dekorelementes (7) befestigt ist.

10. Bauteil (1) nach einem der vorangehenden Ansprüche, **dadurch gekennzeichnet, dass** der Lichtleiter (9) eine Oberfläche, insbesondere eine Vorderseite sowie eine Hinterseite aufweist, wobei die Vorderseite des Lichtleiters (9) der Hinterseite (8) des flächigen Dekorelementes (7) zugewandt ist und wobei die Lichtumlenkstrukturen (17) bevorzugt an der Oberfläche des Lichtleiters (9), bevorzugter an der Hinterseite des Lichtleiters (9), noch bevorzugter innerhalb des Lichtleiters (9), angeordnet sind.

11. Bauteil (1) nach Anspruch 10, **dadurch gekennzeichnet, dass** zwischen der Hinterseite (8) des flächigen Dekorelementes (7) und der Vorderseite des Lichtleiters (9) wenigstens bereichsweise ein Spalt angeordnet ist, welcher bevorzugt mit Luft gefüllt ist.

12. Bauteil (1) nach einem der vorangehenden Ansprüche, **dadurch gekennzeichnet, dass** der Lichtleiter (9) wenigstens einen Teilbereich der Rückseite (3), bevorzugt wenigstens einen Teilbereich der Rückseite (3) sowie wenigstens einen Teilbereich (35-40) der Innenseite (6), bildet.

13. Bauteil (1) nach einem der vorangehenden Ansprüche, **dadurch gekennzeichnet, dass** das flächige Dekorelement (7) opak ausgebildet ist.

14. Bauteil (1) nach einem der vorangehenden Ansprüche, **dadurch gekennzeichnet, dass** das Beleuchtungsmittel (10) wenigstens teilweise, bevorzugt im Wesentlichen vollständig, bevorzugter vollständig, im Lichtleiter (9) eingebettet ist.

15. Kraftfahrzeug mit einem Bauteil (1) nach einem der vorangehenden Ansprüche, **dadurch gekennzeichnet, dass** das Kraftfahrzeug eine Oberfläche aufweist, wobei die Rückseite (3) und / oder die Innenseite (6) wenigstens teilweise auf der Oberfläche des Kraftfahrzeuges aufliegt und wobei bevorzugt wenigstens ein Teilbereich der Rückseite (3) und / oder der Innenseite (6), welcher auf der Oberfläche aufliegt, durch den Lichtleiter (9) gebildet ist.

## Claims

1. Illuminable component (1) comprising a base element (63) which forms a front side (2) and a rear side (3) of the component (1), a rim (4) attached to and enclosing the base element (63) and having an outer side (5) and an inner side (6), wherein the outer side (5) directly adjoins the front side (2) and the inner side (6) directly adjoins the rear side (3), the component (1) comprising
- a two-dimensionally extending decorative element (7) which forms at least one partial region (21, 23) of the front side (2) and has a back side (8) opposite the at least one partial region (21, 23) of the front side (2),
- a light guide (9) arranged on the back side (8) of the two-dimensionally decorative element (7), and
- an illumination means (10) for coupling light into the light guide (9), wherein the light guide (9) extends at least into a region of the rim (4),
wherein the base element (63) includes a partial region of the two-dimensionally extending decorative element (7), a partial region of the light guide (9) as well as the illumination means (10),
wherein the light guide (9) comprises light-deflecting structures (17) in the region of the rim (4) for the targeted emission of light from the outer side (5) of the rim (4),
and that the light-deflecting structures (17) form a surface region of the light guide (9) and are designed as elevations and/or depressions or are arranged inside of the light guide (9) and are produced by means of a laser.

2. Component (1) according to claim 1, **characterized in that** the two-dimensionally extending decorative element (7) forms at least a partial region (31) of the outer side (5) of the rim (4).

3. Component (1) according to claim 1 or 2, **characterized in that** the two-dimensionally extending decorative element (7) has, preferably in a region of the front side (2) and/or of the outer side (5), at least one aperture (13), wherein the light guide (9) preferably engages in at least one aperture (13).

4. Component (1) according to claim 3, **characterized in that** at least one aperture (13) at least partially, preferably completely, encloses the front side (2), preferably as seen in the plan view of the front side (2).

5. Component (1) according to claim 3 or 4, **characterized in that** within at least one aperture (13), which is preferably arranged in a region of the front side (2) and/or of the outer side (5), at least one island-shaped part (14), which is preferably formed by the two-dimensionally extending decorative element (7), is arranged, wherein the light guide (9) preferably engages in the aperture (13), so that the island-shaped part (14), preferably seen in the plan view of the front side (2) and/or outer side (5), is at least partially, preferably completely, enclosed by the light guide (9) engaging in the aperture (13), and wherein preferably the island-shaped part (14) is supported by the light guide (9).

6. Component (1) according to one of the preceding claims, **characterized in that** the rim (4) at least partially, preferably completely, encloses the base element (63), preferably as seen in plan view of the front side (2), wherein the light guide (9) preferably forms at least an outermost region (16) of the outer side (5) of the rim (4).

7. Component (1) according to one of the preceding claims, **characterized in that** the light guide (9) extends essentially over the entire back side (8) of the two-dimensionally extending decorative element (7).

8. Component (1) according to one of the preceding claims, **characterized in that** at least a partial region of the outer side (5) of the rim (4) encloses an angle (a-d) of 90° - 270°, preferably of 180 - 270°, with the front side (2), preferably with the front side (2) formed by the two-dimensionally extending decorative element (7).

9. Component (1) according to one of the preceding claims, **characterized in that** the light guide (9) is attached to the back side (8) of the two-dimensionally extending decorative element (7).

10. Component (1) according to one of the preceding claims, **characterized in that** the light guide (9) has a surface, in particular a front side and a back side, wherein the front side of the light guide (9) faces the back side (8) of the two-dimensionally extending decorative element (7), and wherein the light deflecting structures (17) are preferably arranged on the surface of the light guide (9), more preferably on the back side of the light guide (9), even more preferably inside the light guide (9).

11. Component (1) according to claim 10, **characterized in that** between the back side (8) of the two-dimensionally extending decorative element (7) and the front side of the light guide (9) there is arranged, at least in regions, a gap which is preferably filled with air.

12. Component (1) according to one of the preceding claims, **characterized in that** the light guide (9) forms at least a partial region of the rear side (3), preferably at least a partial region of the rear side (3) as well as at least a partial region (35-40) of the inner side (6).

13. Component (1) according to one of the preceding claims, **characterized in that** the two-dimensionally extending decorative element (7) is opaque.

14. Component (1) according to one of the preceding claims, **characterized in that** the illumination means (10) is at least partially, preferably substantially completely, more preferably completely, embedded in the light guide (9).

15. Motor vehicle having a component (1) according to one of the preceding claims, **characterized in that** the motor vehicle has a surface, wherein the rear side (3) and/or the inner side (6) rests at least partially on the surface of the motor vehicle, and wherein preferably at least a partial region of the rear side (3) and/or of the inner side (6), which rests on the surface, is formed by the light guide (9).

## Revendications

1. Composant (1) pouvant être éclairé comprenant un élément de base (63), qui forme une face avant (2) et une face arrière (3) du composant (1), ainsi qu'un bord (4) fixé à l'élément de base (63) et entourant celui-ci, avec une face extérieure (5) et une face intérieure (6), la face extérieure (5) se raccordant directement à la face avant (2) et la face intérieure (6) se raccordant directement à la face arrière (3), l'élément de base (1) présentant
- un élément décoratif plat (7), lequel forme au moins un zone partielle (21, 23) du côté avant (2) et qui présente une face arrière (8) opposée à l'au moins une zone partielle (21, 23) de la face avant (2),
- un guide de lumière (9) disposé au niveau de la face arrière (8) de l'élément décoratif plat (7) et
- un moyen d'éclairage (10) pour coupler la lumière dans le guide de lumière (9), dans lequel le guide de lumière (9) s'étend au moins jusque dans une zone du bord (4), et dans lequel l'élément de base (63) comprend une zone partielle de l'élément décoratif plat (7),
une zone partielle du guide de lumière (9), ainsi que le moyen d'éclairage,
dans lequel le guide de lumière (9) présente des structures de déviation de lumière (17) dans la zone du bord (4) pour l'émission ciblée de lumière de la lumière provenant de la face extérieure (5) du bord (4), et que les structures de déviation de lumière (17) forment une zone de surface du guide de lumière (9) et sont réalisées en tant que élévations et/ou renfoncement ou sont disposées à l'intérieur du guide de lumière (9) et sont réalisées au moyen d'un laser.

2. Composant (1) selon la revendication 1, **caractérisé en ce que** l'élément décoratif plat (7) forme au moins une zone partielle (31) de la face extérieure (5) du bord (4).

3. Composant (1) selon la revendication 1 ou 2, **caractérisé en ce que** l'élément décoratif plat (7), de préférence dans une zone de la face avant (2) et / ou de la face extérieure (5), présente au moins une percée (13), dans lequel de préférence le guide de lumière (9) vient s'engager dans au moins une percée (13).

4. Composant (1) selon la revendication 3, **caractérisé en ce qu'**au moins une percée (13) entoure au moins partiellement, de préférence complètement, la face avant (2), de préférence vue de dessus sur la face avant (2).

5. Composant (1) selon la revendication 3 ou 4, **caractérisé en ce que** à l'intérieur de l'au moins une percée (13), qui est de préférence disposée dans une zone de la face avant (2) et / ou de la face extérieure (5), au moins un partie en forme d'îlot (14) est disposée, qui est formée de préférence par l'élément décoratif plat (7), dans lequel le guide de lumière (9) vient s'engager de préférence dans la percée (13) de sorte que la partie en forme d'îlot (14), de préférence vue de dessus sur la face avant (2) et / ou la face extérieure (5), au moins partiellement, de préférence complètement, est entourée par le guide de lumière (9) venant s'engager dans la percée (13) et dans lequel la partie en forme d'îlot (14) est de préférence portée par le guide de lumière (9).

6. Composant (1) selon l'une des revendications précédentes, **caractérisé en ce que** le bord (4) renferme au moins partiellement, de préférence complètement, l'élément de base (63), de préférence vu de dessus sur la face avant (2), dans lequel le guide de lumière (9) forme de préférence au moins une zone la plus à l'extérieur (16) de la face extérieure (5) du bord (4).

7. Composant (1) selon l'une des revendications précédentes, **caractérisé en ce que** le guide de lumière (9) s'étend essentiellement sur toute la face arrière (8) de l'élément décoratif plat (7).

8. Composant (1) selon l'une des revendications précédentes, **caractérisé en ce qu'**au moins une zone partielle de la face extérieure (5) du bord (4) comprend avec la face avant (2), de préférence avec la face avant (2) formée par l'élément décoratif plat (7), un angle (a-d) de 90 ° à 270 °, de préférence de 180 à 270 °.

9. Composant (1) selon l'une des revendications précédentes, **caractérisé en ce que** le guide de lumière (9) est fixé sur la face arrière (8) de l'élément décoratif plat (7).

10. Composant (1) selon l'une des revendications précédentes, **caractérisé en ce que** le guide de lumière (9) présente une surface, notamment une face avant ainsi qu'une face arrière, dans lequel la face avant du guide de lumière (9) fait face à la face arrière (8) de l'élément décoratif plat (7) et dans lequel les structures de déviation de lumière (17) sont de préférence disposées sur la surface du guide de lumière (9), plus de préférence sur la face arrière du guide de lumière (9), encore plus préférablement à l'intérieur du guide de lumière (9).

11. Composant (1) selon la revendication 10, **caractérisé en ce qu'**entre la face arrière (8) de l'élément décoratif plat (7) et la face avant du guide de lumière (9), une fente est disposée au moins dans certaines zones, qui est de préférence remplie d'air.

12. Composant (1) selon l'une des revendications précédentes, **caractérisé en ce que** le guide de lumière (9) forme au moins une zone partielle de la face arrière (3), de préférence au moins une zone partielle de la face arrière (3) ainsi qu'au moins une zone partielle (35 - 40) de la face intérieure (6).

13. Composant (1) selon l'une des revendications précédentes, **caractérisé en ce que** l'élément décoratif plat (7) est réalisé de manière opaque.

14. Composant (1) selon l'une des revendications précédentes, **caractérisé en ce que** le moyen d'éclairage (10) est au moins partiellement, de préférence essentiellement complètement, plus de préférence complètement, encastré dans le guide de lumière (9).

15. Véhicule automobile avec un composant (1) selon l'une des revendications précédentes, **caractérisé en ce que** le véhicule automobile présente une surface, dans lequel la face arrière (3) et / ou la face intérieure (6) repose(nt) au moins partiellement sur la surface du véhicule automobile, et dans lequel de préférence au moins une zone partielle de la face arrière (3) et / ou de la face intérieure (6), qui repose(nt) sur la surface, est formée par le guide de lumière (9).
